(19) Europäisches Patentamt
European Patent Office
Office européen des brevets

(11) **EP 4 517 861 A1**

(12) **EUROPEAN PATENT APPLICATION**

(43) Date of publication:
**05.03.2025 Bulletin 2025/10**

(21) Application number: **24179989.9**

(22) Date of filing: **04.06.2024**

(51) International Patent Classification (IPC):
***H01M 4/133*** *(2010.01)* ***H01M 4/134*** *(2010.01)*
***H01M 4/136*** *(2010.01)* ***H01M 4/36*** *(2006.01)*
***H01M 4/38*** *(2006.01)* ***H01M 4/40*** *(2006.01)*
***H01M 4/62*** *(2006.01)* ***H01M 4/66*** *(2006.01)*
***H01M 10/052*** *(2010.01)* ***H01M 10/0525*** *(2010.01)*
***H01M 10/056*** *(2010.01)* ***H01M 4/58*** *(2010.01)*
***H01M 10/0562*** *(2010.01)*

(52) Cooperative Patent Classification (CPC):
**H01M 10/056; H01M 4/133; H01M 4/134; H01M 4/136; H01M 4/364; H01M 4/366; H01M 4/38; H01M 4/382; H01M 4/386; H01M 4/387; H01M 4/405; H01M 4/5815; H01M 4/62; H01M 4/661; H01M 4/667;** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.09.2023 KR 20230117224**

(71) Applicant: **Samsung SDI Co., Ltd.**
**Yongin-si, Gyeonggi-do 17084 (KR)**

(72) Inventors:
- **Park, Taehyun**
  **17084 Yongin-si, Gyeonggi-do (KR)**
- **Son, Inhyuk**
  **17084 Yongin-si, Gyeonggi-do (KR)**
- **Jo, Sungnim**
  **17084 Yongin-si, Gyeonggi-do (KR)**
- **Shim, Kyueun**
  **17084 Yongin-si, Gyeonggi-do (KR)**
- **Lee, Jieun**
  **17084 Yongin-si, Gyeonggi-do (KR)**
- **Lim, Hyungsub**
  **17084 Yongin-si, Gyeonggi-do (KR)**

(74) Representative: **Michalski Hüttermann & Partner Patentanwälte mbB**
**Kaistraße 16A**
**40221 Düsseldorf (DE)**

(54) **ALL SOLID SECONDARY BATTERY**

(57) An all solid secondary battery including a cathode, an anode, and a solid electrolyte layer provided between the cathode and the anode is provided. The anode includes an anode current collector and a first anode active material layer provided on one surface of the anode current collector. The cathode includes a cathode current collector and a cathode active material layer provided on one surface or two surfaces of the cathode current collector and containing a cathode active material, which $Li_2S$, a $Li_2S$ composite, or a combination thereof. The all solid secondary battery includes an interlayer positioned between the anode and the solid electrolyte layer and the interlayer contains a single lithium ion conducting polymer (SLICP) and a liquid electrolyte.

FIG. 1

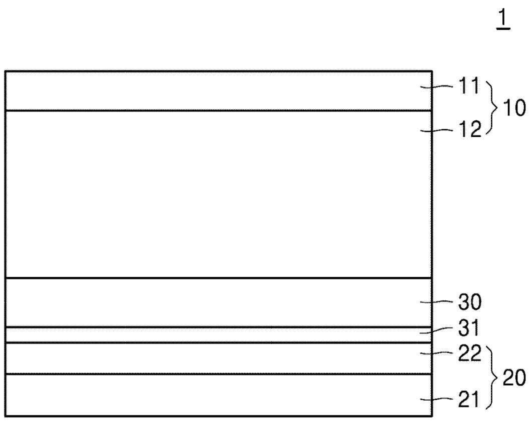


EP 4 517 861 A1

(52) Cooperative Patent Classification (CPC): (Cont.)
**H01M 10/052; H01M 10/0525; H01M 10/0562;**
H01M 2300/0068; H01M 2300/0082;
H01M 2300/0085; H01M 2300/0094

## Description

## CROSS-REFERENCE TO RELATED APPLICATION

This application claims priority to and the benefit of Korean Patent Application No. 10-2023-0117224, filed on September 04, 2023, in the Korean Intellectual Property Office, the entire content of which is incorporated herein by reference.

## BACKGROUND

### 1. Field

According to one or more embodiments, the present disclosure relates to an all solid secondary battery.

### 2. Description of the Related Art

Recently, in accordance with industrial demand, batteries having relatively high energy density and relatively high safety have been actively developed or pursued. For example, lithium batteries are utilized in one or more suitable applications including information devices, communication devices, and/or the like and also in the automotive field (e.g., vehicles or electric vehicles) and/or the like. Because vehicles are intimately intertwined and related to people's activities, e.g., on an everyday basis, the safety thereof is also important.

Lithium batteries that utilize liquid electrolyte solutions including combustible organic solvents, may have a risk of overheating and the possibility of fires and/or explosions if (e.g., when) a short circuit occurs. Therefore, all solid secondary batteries utilizing a solid electrolyte instead of a liquid electrolyte have been proposed. For example, solid electrolytes should have a lower possibility of ignition as compared with liquid electrolytes.

All solid secondary batteries each adopt a solid electrolyte instead of a liquid electrolyte, and thus the possibility of fires or explosions may be reduced, even if (e.g., when) a short circuit occurs, and thus improved safety may be provided.

However, in all solid secondary batteries, because a solvent is not utilized to prepare a cathode, an electrolyte, and an anode, the ionic conductivity may decrease and interfacial resistance may increase. In order to remove these limitations, high pressure is required or may be provided to manufacture an all solid secondary battery (or battery cell), and if (e.g., when) a lithium plating layer is utilized as an anode, additional pressing is required or may be needed to uniformly deposit the lithium. In some embodiments, in order to improve a pressing process, there is a need or desire to design a polymer film that assists in uniformly depositing lithium between an electrolyte and an anode.

## SUMMARY

One or more aspects are directed toward an all solid secondary battery having improved lifespan and/or high-rate characteristics by inducing lithium to be uniformly deposited in an anode.

Additional aspects will be set forth in part in the description which follows and, in part, will be apparent from the description, or may be learned by practice of the presented embodiments of the present disclosure.

According to one or more embodiments, an all solid secondary battery includes a cathode, an anode, and a solid electrolyte layer provided between the cathode and the anode. The anode includes an anode current collector and a first anode active material layer provided on a surface (e.g., one surface or side) of the anode current collector. The cathode includes a cathode current collector and a cathode active material layer provided on a surface (e.g., at least one surface or side, e.g., one surface or two opposite surfaces) of the cathode current collector and includes a cathode active material, wherein the cathode active material includes $Li_2S$, a $Li_2S$ composite, or a combination thereof. The all solid secondary battery includes an interlayer positioned between the anode and the solid electrolyte layer and the interlayer includes a single lithium ion conducting polymer (SLICP) and a liquid electrolyte.

## BRIEF DESCRIPTION OF THE DRAWINGS

The preceding and other aspects, features, and advantages of certain embodiments of the present disclosure will be more apparent from the following description taken in conjunction with the accompanying drawings, in which:

FIGS. 1-5 are cross-sectional views of all solid secondary batteries according to one or more embodiments of the present disclosure.

## DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. In some embodiments, the embodiments are merely described, by referring to the drawings, to explain aspects of the present description. As utilized herein, the term "and/or" includes any and all combinations of one or more of the associated listed items. Expressions such as "at least one of," if (e.g., when) preceding a list of elements, modify the entire list of elements and do not modify the individual elements of the list.

The terminology utilized hereinbelow is utilized for the purpose of describing particular embodiments only and is not intended to limit the present disclosure. As utilized herein, the singular forms are intended to include the plural forms as well, unless the context clearly indicates otherwise. Unless otherwise defined, all terms (including technical and scientific terms) utilized in the present disclosure have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

Embodiments are described in the present disclosure with reference to cross-sectional views which are schematic diagrams of idealized embodiments. As such, variations from the shapes of the illustrations as a result, for example, of manufacturing techniques and/or tolerances, are to be expected. In some embodiments, the embodiments described in the present disclosure should not be construed as limited to the particular shapes regions of illustrated in the present disclosure but may include deviations in shapes that result, for example, from manufacturing. For example, regions illustrated or described as being flat may be typically rough and/or have nonlinear features. Moreover, sharp-drawn angles may be round. In some embodiments, regions illustrated in the drawings are schematic in nature and their shapes are not intended to illustrate the actual shape of a region and are not intended to limit the scope of the claims.

The present disclosure may, however, be embodied in different forms and should not be construed as limited to the embodiments described in the present disclosure. These embodiments are provided so that the present disclosure will be thorough and complete, and will fully convey the scope of the present disclosure to those skilled in the art. Like reference numerals designate like elements, and duplicative descriptions thereof may not be provided.

If (e.g., when) it is described that an element is "on" another element, it will be understood that the element may be provided directly on another element or still another element may be interposed therebetween. In some embodiments, if (e.g., when) it is described that an element is "directly on" another element, still another element is not interposed therebetween.

It will be understood that, although the terms "first," "second," and "third" may be utilized in the present disclosure to describe one or more suitable elements, components, regions, layers, and/or sections, these elements, components, regions, layers, and/or sections should not be limited by these terms. These terms are only utilized to distinguish one element, component, region, layer, or section from another region, layer, or section. In some embodiments, a first element, component, region, layer, or section described herein may be termed a second element, component, region, layer, or section without departing from the teachings of the present specification.

The terminology utilized herein is intended to describe only a specific embodiment and is not intended to limit the present disclosure. As utilized herein, the singular forms "a," "an," and "the" are intended to include the plural forms, including "at least one," unless the context clearly indicates otherwise. "At least one" should not be construed as being limited to the singular. As utilized in the present disclosure, the term "and/or" includes any and all combinations of one or more of the associated listed items. The terms "includes," "including," "include," "having," "has," "have," "comprise," "comprises," and/or "comprising," if (e.g., when) utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilize or operation in addition to the orientation illustrated in the drawings. For example, if (e.g., when) a device in the drawings is turned over, elements described as "below" or "beneath" other elements or features would then be "above" or "over" the other elements or features. Thus, the example term "below" may encompass both (e.g., simultaneously) orientations of above and below. The device may be otherwise oriented (rotated 90 degrees or at other orientations), and the spatially relative terms utilized herein may be interpreted accordingly.

As used herein, expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b,

only c, both (e.g., simultaneously) a and b, both (e.g., simultaneously) a and c, both (e.g., simultaneously) b and c, all of a, b, and c, or variations thereof.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

If (e.g., when) it is described that an element is "on" another element, it will be understood that the element may be provided directly on another element or still another element may be interposed therebetween. On the other hand, if (e.g., when) it is described that an element is "directly on" another element, still another element is not interposed therebetween.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

## Definitions

The term "Group" refers to a group of the periodic table of the elements according to the International Union of Pure and Applied Chemistry ("IUPAC") Groups 1-18 group classification system.

Unless otherwise defined, in the present disclosure, the term "particle diameter" or "crystallite size" refers to an average diameter if (e.g., when) particles or crystallites are spherical and refers to an average major axis length if (e.g., when) particles or crystallites are non-spherical. A particle diameter or crystallite size may be measured by utilizing a particle size analyzer (PSA) or from a transmission electron microscope (TEM) image or a scanning electron microscope (SEM) image. A "particle diameter" or "crystallite size" is, for example, an average particle diameter or average crystallite size. An "average particle diameter" or "average crystallite size" refers to, for example, a median particle diameter or crystallite size (D50), which refers to the diameter of particles or crystallites having a cumulative volume of 50 vol% in particle size or crystallite size distribution. As another method, a dynamic light-scattering measurement device may be utilized to perform measurement and data analysis, the number of particles or crystallites may be counted for each particle size or crystallite size range, and then the average particle diameter or average crystallite diameter (D50) may be obtained through calculation therefrom. In some embodiments, the average particle diameter or average crystallite diameter (D50) may be measured by utilizing a laser diffraction method. If (e.g., when) measurement is performed by a laser diffraction method, for example, particles or crystallites to be measured may be dispersed in a dispersion medium, and then may be irradiated with ultrasonic waves of about 28 kHz at an output of 60 W by utilizing a commercially available laser diffraction particle or crystallite size measurement device (e.g., Microtrac MT 3000), and then the average or crystallite particle diameter (D50) on the basis of 50% of the particle or crystallite diameter distribution in the measurement device may be calculated.

D50 refers to a particle (e.g., or crystallite) size corresponding to a 50 % cumulative volume if (e.g., when) a particle size distribution measured through a laser diffraction method is calculated from particles having a smaller particle size.

D90 refers to a particle size corresponding to a 90 % cumulative volume if (e.g., when) a particle size distribution measured through a laser diffraction method is calculated from particles having a smaller particle size.

D10 refers to a particle size corresponding to a 10 % cumulative volume if (e.g., when) a particle size distribution measured through a laser diffraction method is calculated from particles having a smaller particle size.

The term "metal" as utilized herein includes all of metals and metalloids such as silicon and germanium in an elemental or ionic state.

The term "alloy" as utilized herein refers to a mixture of two or more metals.

The term "electrode active material" as utilized herein refers to an electrode material that may undergo lithiation and delithiation.

As utilized herein, the term "cathode active material" refers to a cathode material that may undergo lithiation and delithiation, and the term "anode active material" refers to an anode material that may undergo lithiation and delithiation.

As utilized herein, the terms "lithiate" and "lithiating" refer to a process of adding lithium to an electrode active material, and the terms "delithiate" and "delithiating" refer to a process of removing lithium from the electrode active material.

The terms "charge" and "charging" as utilized herein refer to a process of providing electrochemical energy to a battery, and the terms "discharge" and "discharging" as utilized herein refer to a process of removing electrochemical energy from the battery.

The terms "positive electrode" and "cathode" as utilized herein refer to an electrode at which electrochemical reduction and lithiation occur during a discharging process, and the terms "negative electrode" and "anode" as utilized

herein refer to an electrode at which electrochemical oxidation and delithiation occur during a discharging process.

The term "combination thereof" as utilized herein may refer to a mixture, laminate, composite, copolymer, alloy, blend, reaction product and/or the like of constituents.

The term "length", "thickness", and "width" as utilized herein refers to, for example, an average length, an average thickness, and an average width respectively. The "length", "thickness", and "width" measured utilizing software from a scanning electron microscope image.

In present disclosure, "not include a or any 'component'" "exclude a or any 'component'", "'component'-free", and/or the like refers to that the "component" not being added, selected or utilized as a component in the composition/-structure, but the "component" of less than a suitable amount may still be included due to other impurities and/or external factors.

In present disclosure, the term "A is on surface of B" does not exclude embodiments where there are further layers between A and B.

While specific embodiments have been described, alternatives, modifications, variations, improvements, and substantial equivalents that are or may be presently unforeseen may arise to applicants or others skilled in the art. In some embodiments, the appended claims as filed and as they may be amended are intended to embrace all such alternatives, modifications, variations, improvements, and substantial equivalents.

Hereinafter, an all solid secondary battery according to embodiments will be described in more detail.

**Introduction**

The all solid secondary battery according to one or more embodiments may include a cathode, an anode, and a solid electrolyte layer provided between the cathode and the anode, wherein the anode may include an anode current collector and a first anode active material layer provided on a surface (e.g., one surface (or side)) of the anode current collector. The cathode may include a cathode current collector and a cathode active material layer provided on a surface (e.g., at least one surface (e.g., on two (e.g., opposing) surfaces)) of the cathode current collector. The cathode active material layer may include a cathode active material, that may include $Li_2S$, a $Li_2S$ composite, or a combination thereof, and an interlayer including (e.g., containing) a single lithium ion conducting polymer (SLICP) and a liquid electrolyte that may be positioned between the anode and the solid electrolyte layer.

In a lithium sulfur battery utilizing a liquid electrolyte as an electrolyte, lithium polysulfide may be produced through a reaction between lithium ions and sulfur may dissolve in an electrolyte solution, and thus the capacity and lifespan characteristics of the battery may deteriorate. In comparison, in a solid-type or kind lithium sulfur battery utilizing a solid electrolyte, safety may be secured or improved because lithium polysulfide does not dissolve in an electrolyte solution and the solid-type or kind lithium sulfur battery does not include flammable organic solvents.

In an all solid secondary battery, a solvent is not utilized (e.g., is excluded), for example, in a cathode, an electrolyte, and an anode. As a result, interfacial resistance may be high, and in order to avoid such a limitation, a high pressure is required to manufacture a cell. For example, if (e.g., when) a lithium plating layer is utilized as an anode, additional pressing may be required to uniformly deposit lithium. In some embodiments, in order to improve a pressing process, it may be advantageous or important to form a polymer film that assists in uniformly depositing lithium between an electrolyte and an anode.

In the all solid secondary battery according to one or more embodiments of the present disclosure, the anode may be lithium anode, and the interlayer including the SLICP and the liquid electrolyte may be formed on the lithium anode to induce substantially uniform deposition at the anode. As a result, an additional pressing process may be improved so that pressing may be performed at a low or reduced pressure or additional pressing may be unnecessary.

The interlayer may include (e.g., contain) the SLICP including (e.g., containing) free (e.g., mobile) Li ions and immobilized anions to provide (e.g., have a function of) for inducing lithium to be uniformly precipitated at the lithium anode.

The SLICP may be a material that includes lithium as a cation and includes at least one selected from among carboxylate, sulfonate, and sulfonylimide as anions and may have excellent or suitable lithium ion characteristics. The SLICP may include a lithium ion conductive unit such as ethylene oxide, and the lithium mobility (e.g., lithium ion mobility) of the SLICP may increase.

The interlayer may include (e.g., contain) the SCLIP and the liquid electrolyte. A thickness of the interlayer may be in a range of about 1 micrometer ($\mu$m) to about 50 $\mu$m, about 1 $\mu$m to about 30 $\mu$m, about 1 $\mu$m to about 20 $\mu$m, or about 1 $\mu$m to about 10 $\mu$m. If (e.g., when) the thickness of the interlayer is in such a range, interfacial resistance characteristics may be improved, and substantially uniform deposition of lithium may be induced, thereby manufacturing an all solid secondary battery having improved lifespan and high-rate characteristics.

The SLICP may be a polymer including a repeating unit represented by Formula 1, a polymer including a repeating unit represented by Formula 2 or Formula 3, a polymer including the repeating unit represented by Formula 2 or Formula 3 and a repeating unit represented by Formula 4, a polymer including a repeating unit represented by Formula 5, or a combination thereof. For example, the SLICP may be a polymer including a repeating unit selected from among

the repeating unit represented by Formula 1,

the repeating unit represented by Formula 2 or Formula 3,
the repeating unit represented by Formula 2 or Formula 3 and Formula 4, and
the repeating unit represented by Formula 5, or

a combination thereof.

Formula 1

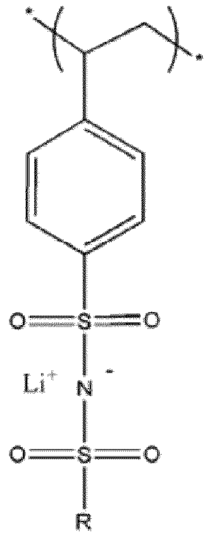

In Formula 1, R may be a $C_1$-$C_6$ alkyl group partially substituted with fluorine or perfluorinated, a $C_2$-$C_6$ alkenyl group partially substituted with fluorine or perfluorinated, or a $C_2$-$C_6$ alkynyl group partially substituted with fluorine or perfluorinated.

Formula 2

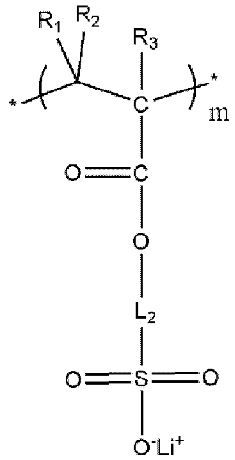

In Formula 2, $L_2$ may be a linker and may be a $C_1$-$C_{10}$ alkylene group, a $C_2$-$C_{10}$ alkenylene group, or a $C_2$-$C_{10}$ alkynylene group, $R_1$ to $R_3$ may each independently hydrogen or a $C_1$-$C_{30}$ alkyl group, and m may be or denote a mole fraction of the repeating unit and may be a number from 0 to 1.

Formula 3

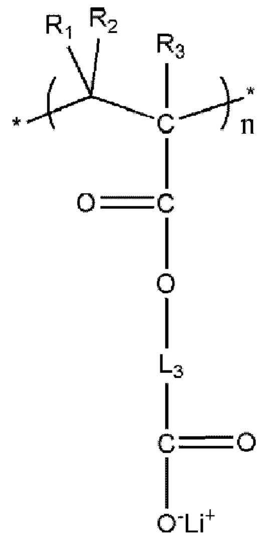

In Formula 3, $L_3$ may be a linker and may be a $C_1$-$C_{10}$ alkylene group or - $(CH_2CH_2O)a$-, a may be an integer from 1 to 5, $R_1$ to $R_3$ may each independently hydrogen or a $C_1$-$C_{30}$ alkyl group, and n may be or denote a mole fraction of the repeating unit and may be a number from 0 to 1.

Formula 4

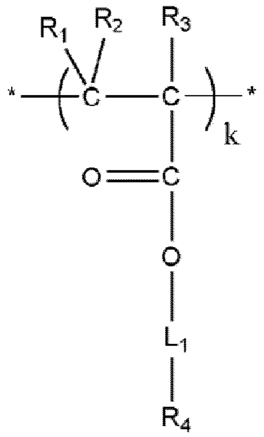

In Formula 4, $L_1$ may be a $C_1$-$C_{10}$ alkylene group or $-(CH_2CH_2O)a$-, a may be an integer from 1 to 5, $R_4$ may be hydrogen or a $C_1$-$C_{10}$ alkyl group, and k may be or denote a mole fraction of the repeating unit and may be a number from 0 to 1.

Formula 5

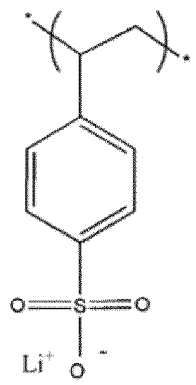

In the polymer including the repeating unit represented by Formula 2 or Formula 3, m and n may each be 1. In the polymer including the repeating unit represented by Formula 2 and the repeating unit represented by Formula 4, the sum of m and k may be 1. In the polymer including the repeating unit represented by Formula 3 and the repeating unit represented by Formula 4, the sum of n and k may be 1.

A polymerization degree of the herein-described polymer may be, for example, in a range of about 50 to about 100, about 55 to about 95, or about 40 to about 80, and a weight average molecular weight thereof may be 10,000 Dalton or more or in a range of about 10,000 Dalton to about 600,000 Dalton, or about 10,000 to about 20,000 Dalton.

The interlayer may include polymers including at least one of (e.g., selected from among) repeating units represented by Formulas 5 to 11, or a combination thereof.

Formula 5

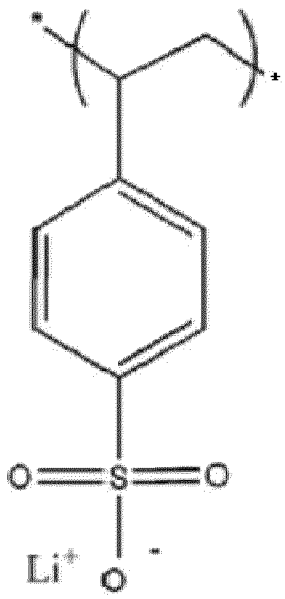

Formula 6

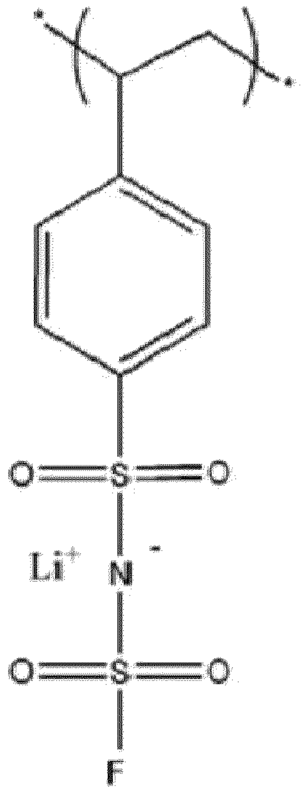

Formula 7

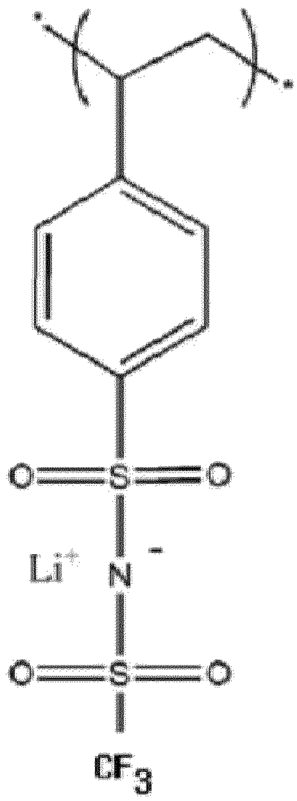

Formula 8

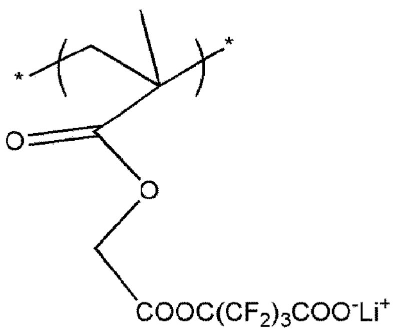

Formula 9

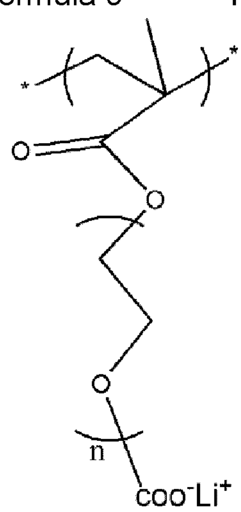

Formula 10

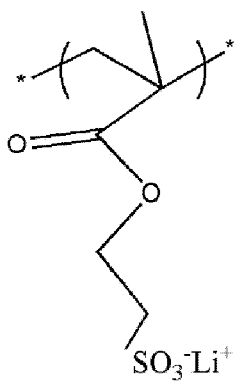

Formula 11

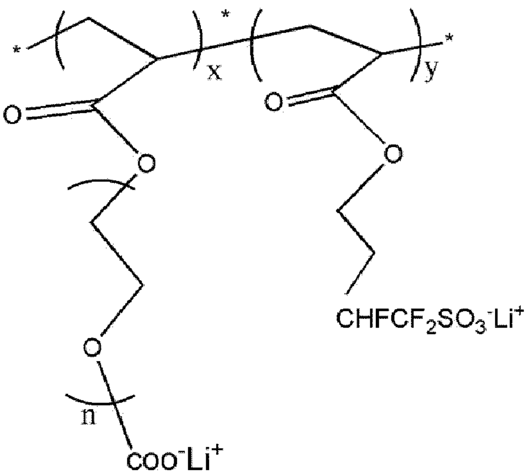

In Formula 11, x and y may each be or denote a mole fraction of the repeating unit and may each independently be a number from 0 to 1, the sum of x and y may be 1, and x and y may be in a range of 0.1 to 0.9, 0.2 to 0.8, or 0.3 to 0.7.

A content (e.g., amount) of the liquid electrolyte in the interlayer may be in a range of about 1 part by weight to about 30 parts by weight, about 1 part by weight to about 20 parts by weight, or about 5 parts by weight to about 15 parts by weight with respect to 100 parts by weight of the total weight of the interlayer. If (e.g., when) the thickness of the interlayer is in the described range, lithium ions may move more smoothly, and thus an all solid secondary battery having improved interfacial resistance characteristics and improved lifespan and high-rate characteristics may be manufactured.

The liquid electrolyte may include a salt and an organic solvent.

Examples of the organic solvent may include non-protic organic solvents such as N-methyl-2-pyrrolidinone, propylene carbonate, ethylene carbonate (EC), butylene carbonate, dimethyl carbonate (DMC), diethyl carbonate (DEC), gamma-butyrolactone, 1,2-dimethoxyethane, tetrahydroxy franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, ethyl propionate, and ethyl propionate. Among the non-protic organic solvents, a carbonate-based solvent such as propylene carbonate, ethylene carbonate (EC), butylene carbonate, dimethyl carbonate (DMC), or diethyl carbonate (DEC) may be utilized.

Any suitable material may be utilized as the lithium salt as long as the material may be commonly utilized in lithium secondary batteries. The lithium salt may include, for example, at least one selected from among LiSCN, $LiN(CN)_2$, $LiClO_4$, $LiBF_4$, $LiAsF_6$, $LiPF_6$, $LiCF_3SO_3$, $LiC(CF_3SO_2)_3$, $LiC(FSO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, and $LiB(C_2O_4)_2$ which are a material easily soluble in a non-aqueous solvent.

A concentration of the lithium salt may be, for example, in a range of about 1 M to about 5 M, about 1 M to about 3 M, for example, about 1 M to about 2.5 M in the liquid electrolyte. If (e.g., when) the lithium salt is included in the described range, the lifespan and high-rate characteristics of an all solid secondary battery may be improved.

The liquid electrolyte may further include at least one selected from among an ionic liquid and a polymer ionic liquid.

### Cathode

A cathode according to embodiments may include a cathode current collector, and a cathode active material layer provided (e.g., positioned) on the cathode current collector, and including (e.g., containing) a cathode active material, wherein the cathode active material includes $Li_2S$, a $Li_2S$ composite, or a combination thereof.

The $Li_2S$ composite may be represented by $Li_2S$-$Li_aX_b$, wherein $1 \leq a \leq 5$ and, $1 \leq b \leq 5$, and X may be I, Br, Cl, F, H, O, Se, Te, N, P, As, Sb, Al, B, OCl, $PF_6$, $BF_4$, $SbF_6$, $AsF_6$, $ClO_4$, $AlO_2$, $AlCl_4$, NOs, COs, $BH_4$, $SO_4$, BOs, $PO_4$, NCl, $NCl_2$, $BN_2$, or a combination thereof.

A composite of $Li_2S$ and a lithium salt may be, for example, a product obtained by mechanically milling $Li_2S$ and the lithium salt. The composite of $Li_2S$ and the lithium salt may be, for example, a product of a mechanochemical reaction between $Li_2S$ and the lithium salt and thus may be distinguished from a simple mixture of $Li_2S$ and a lithium salt. The simple mixture of $Li_2S$ and the lithium salt may fail to maintain a dense interface between $Li_2S$ and the lithium salt to provide high interfacial resistance, resulting in an increase in internal resistance of the cathode.

The composite of $Li_2S$ and the lithium salt may be represented by $Li_2S$-$Li_aX_b$, wherein $1 \leq a \leq 5$ and $1 \leq b \leq 5$. X may be I, Br, Cl, F, H, O, Se, Te, N, P, As, Sb, Al, B, OCl, $PF_6$, $BF_4$, $SbF_6$, $AsF_6$, $ClO_4$, $AlO_2$, AlCl4, NOs, COs, $BH_4$, $SO_4$, BOs,

$PO_4$, NCl, $NCl_2$, $BN_2$, or a combination thereof. a may be, for example, 1, 2, 3, 4, or 5. b may be, for example, 1, 2, 3, 4, or 5. The lithium salt may be a compound that does not include (e.g., excludes), for example, sulfur (S). The lithium salt may be, for example, a binary compound or a ternary compound. For example, the lithium salt may be a binary compound including lithium and one type or kind of element selected from Groups 13 to 17 of the periodic table of elements. For example, the lithium salt may be a ternary compound including lithium and two types (kinds) of elements selected from Groups 13 to 17 of the periodic table of elements. The binary compound may include, for example, LiI, LiBr, LiCl, LiF, LiH, $Li_2O$, $Li_2Se$, $Li_2Te$, $Li_3N$, LisP, $Li_3As$, $Li_3Sb$, $Li_3Al_2$, LiBs, or a combination thereof. The composite may include the binary compound, and thus the ionic conductivity of the composite may be further improved. The cathode may include such a composite, and thus the internal resistance of the cathode may further decrease. In some embodiments, the cycle characteristics of an all solid secondary battery including such a cathode may be further improved. The ternary compound may include, for example, $Li_3OCl$, $LiPF_6$, $LiBF_4$, $LiSbF_6$, $LiAsF_6$, $LiClO_4$, $LiAlO_2$, $LiAlCl_4$, LiNOs, $Li_2CO_3$, $LiBH_4$, $Li_2SO_4$, LisBOs, $Li_3PO_4$, $Li_4NCl$, $Li_5NCl_2$, $Li_3BN_2$, or a combination thereof. The composite may include such a ternary compound, and thus the ionic conductivity of the composite may be further improved. The cathode may include such a composite, and thus the internal resistance of the cathode may further decrease. In some embodiments, the cycle characteristics of an all solid secondary battery including such a solid electrolyte separator may be further improved.

The composite may further include a carbon-based material. The composite may be a composite of $Li_2S$, lithium salt, and a carbon-based material.

As the carbon-based material, for example, any suitable material may be utilized as long as the material may be a material including carbon atoms and may be utilized as a conductive material in the art. The carbon-based material may be, for example, crystalline carbon, amorphous carbon, or a combination thereof. The carbon-based material may be, for example, a sintered material of a carbon precursor. The carbon-based material may include, for example, carbon nanostructures. The carbon nanostructures may include, for example, one-dimensional carbon nanostructures, two-dimensional carbon nanostructures, three-dimensional carbon nanostructures, or a combination thereof. The carbon nanostructures may include, for example, carbon nanotubes (CNTs), carbon nanofibers (CNFs), carbon nanobelts, carbon nanorods, graphene, or a combination thereof. The carbon-based material may be, for example, a porous carbon-based material or a non-porous carbon-based material. The porous carbon-based material may include, for example, periodic and regular two-dimensional or three-dimensional pores. The porous carbon-based material may include, for example, carbon black (CB) such as Ketjen black (KB), acetylene black (AB), Denka black, thermal black, or channel black; graphite; activated carbon; or a combination thereof. The form of the carbon-based material may be, for example, a particle form (e.g., form of particles), a sheet form, a flake form, and/or the like, but one or more embodiments are not limited thereto. Any suitable material may be utilized as long as the material may be utilized as a carbon-based material in the art. A content (e.g., amount) of the carbon-based material included in the composite of $Li_2S$, the lithium salt, and the carbon-based material may be, for example, in a range of about 1 wt% to about 20 wt%, about 5 wt% to about 20 wt%, or about 10 wt% to about 20 wt% of the total weight of the composite. If (e.g., when) the content (e.g., amount) of the carbon-based material excessively increases (e.g., is substantially high, or higher than the highest end of the ranges), the energy density of a dry cathode film and an all solid secondary battery may decrease. If (e.g., when) the content (e.g., amount) of the carbon-based material excessively decreases, the electronic conductivity of the composite of $Li_2S$, the lithium salt, and the carbon-based material may decrease, and thus the internal resistance of a dry cathode film may increase. In some embodiments, the cycle characteristics of an all solid secondary battery may deteriorate.

A Mohs hardness of each of the lithium salt and the carbon-based material may be independently greater than that of $Li_2S$. The Mohs hardness of $Li_2S$ may be, for example, 0.6 or less. The Mohs hardness of the lithium salt may be 0.7 or more, 0.8 or more, 0.9 or more, 1.0 or more, 1.5 or more, or 2.0 or more. The lithium salt may have a Mohs hardness in such a range so that $Li_2S$ may be more easily pulverized during a milling process, and a solid solution of $Li_2S$ and the lithium salt may be more easily formed. A Mohs hardness of LiI may be, for example, about 2.0. The Mohs hardness of the carbon-based material may be 0.7 or more, 0.8 or more, 0.9 or more, 1.0 or more, 1.2 or more, or 1.5 or more. The carbon-based material may have a Mohs hardness in such a range so that $Li_2S$ may be more easily pulverized during a milling process, and the composite of $Li_2S$, the lithium salt, and the carbon-based material may be more easily formed. A Mohs hardness of CNFs may be, for example, about 1.5.

The carbon-based material may include, for example, a fibrous carbon-based material. The composite of $Li_2S$, the lithium salt, and the carbon-based material may include the fibrous carbon-based material, and thus the electronic conductivity of the composite of $Li_2S$, the lithium salt, and the carbon-based material may be further improved. The composite of $Li_2S$, the lithium salt, and the carbon-based material may include the fibrous carbon-based material, and thus electronic conduction may be more easily performed from the surface to the inside of the composite of $Li_2S$, the lithium salt, and the carbon-based material. The internal resistance of a dry cathode film including the composite of $Li_2S$, the lithium salt, and the carbon-based material may be decreased, and the cycle characteristics of an all solid secondary battery including the dry cathode film may be further improved.

An aspect ratio of the fibrous carbon-based material may be, for example, 2 or more, 3 or more, 4 or more, 5 or more, 10 or more, or 20 or more. The aspect ratio of the fibrous carbon-based material may be, for example, in a range of

about 2 to about 30, about 3 to about 30, about 4 to about 30, about 5 to about 30, about 10 to about 30, or about 20 to about 30. The aspect ratio of the fibrous carbon-based material may be, for example, in a range of about 2 to about 30, about 2 to about 20, about 2 to about 10, about 2 to about 8, about 2 to about 5, or about 2 to about 4. The fibrous carbon-based material may have an aspect ratio in such a range, the overall electronic conductivity of the composite of $Li_2S$, the lithium salt, and the carbon-based material may be improved, and an imbalance of local electronic conductivity in the composite of $Li_2S$, the lithium salt, and the carbon-based material may be further alleviated.

The fibrous carbon-based material may include, for example, carbon nanostructures. The carbon nanostructures may include, for example, CNFs, CNTs, carbon nanobelts, carbon nanorods, or a combination thereof.

The carbon nanostructure may form a primary carbon nanostructure consisting of one carbon nanostructure and a secondary carbon nanostructure in which a plurality of carbon nanostructures may be aggregated.

A diameter (e.g., size or major axis) of the primary carbon nanostructure may be, for example, in a range of about 1 nm to about 200 nm, about 1 nm to about 150 nm, about 1 nm to about 100 nm, about 1 nm to about 50 nm, about 1 nm to about 30 nm, or about 1 nm to about 20 nm. A length of the primary carbon nanostructure may be, for example, in a range of 10 nm to about 2 μm, about 10 nm to about 1.5 μm, about 10 nm to about 1 μm, about 10 nm to about 500 nm, about 10 nm to about 400 nm, about 10 nm to about 300 nm, about 10 nm to about 200 nm, or about 10 nm to about 100 nm. The diameter and length of the primary carbon nanostructure may be measured from a scanning electron microscope (SEM) or transmission electron microscope (TEM) image. In other embodiments, the diameter and/or length of the primary carbon nanostructure may be measured through laser diffraction.

The secondary carbon nanostructure may be, for example, a structure formed by primary carbon nanostructures being entirely or partially agglomerated or clustered to constitute a bundle-type or kind or rope-type or kind nanostructure. The secondary carbon nanostructure may include, for example, a bundle-type or kind carbon nanostructure, a rope-type or kind carbon nanostructure, or a combination thereof. A diameter of the secondary carbon nanostructure may be, for example, in a range of about 2 nanometer (nm) to about 200 nm, about 3 nm to about 150 nm, about 5 nm to about 100 nm, about 5 nm to about 50 nm, about 5 nm to about 30 nm, or about 5 nm to about 20 nm. A length of the secondary carbon nanotube structure may be, for example, in a range of about 20 nm to about 2 μm, about 30 nm to about 1.5 μm, about 50 nm to about 1 μm, about 50 nm to about 500 nm, about 50 nm to about 400 nm, about 50 nm to about 300 nm, about 50 nm to about 200 nm, or about 50 nm to 100 nm. The diameter and length of the secondary carbon nanostructure may be measured from a SEM image or an optical microscope. In other embodiments, the diameter and/or length of the secondary carbon nanostructure may be measured through laser diffraction. The secondary carbon nanostructure may be dispersed, for example, in a solvent and/or the like to be converted into the primary carbon nanostructure and then may be utilized to prepare the composite of $Li_2S$, the lithium salt, and the carbon-based material.

The composite of $Li_2S$ and the lithium salt or the composite of $Li_2S$, the lithium salt, and the carbon-based material may include, for example, a solid solution of $Li_2S$ and a lithium salt. The composite may include the solid solution of $Li_2S$ and the lithium salt, and thus the ionic conductivity of the composite may increase. For example, the solid solution of $Li_2S$ and the lithium salt may include lithium ions provided in $Li_2S$ crystallites, and thus the ionic conductivity of the solid solution of $Li_2S$ and the lithium salt may be improved as compared with that of $Li_2S$. In some embodiments, the ionic conductivity of the composite may be improved, and the internal resistance of the composite may be decreased. The cathode may include such a composite, and thus the internal resistance of the cathode may further decrease. In some embodiments, the cycle characteristics of an all solid secondary battery including such a cathode may be further improved.

A size of the $Li_2S$ crystallite obtained from an X-ray diffraction (XRD) spectrum of the composite of $Li_2S$ and the lithium salt or the composite of $Li_2S$, the lithium salt, and the carbon-based material may be, for example, 20 nm or less, 15 nm or less, or 10 nm or less. The size of the $Li_2S$ crystallite obtained from the XRD spectrum of the composite may be, for example, in a range of about 1 nm to about 20 nm, about 1 nm to about 15 nm, or about 3 nm to about 10 nm. The size of the $Li_2S$ crystallite may decrease, and thus a contact area between $Li_2S$ and the lithium salt may further increase. The contact area between $Li_2S$ and the lithium salt may further increase, and thus the ionic conductivity of the composite of $Li_2S$ and the lithium salt may further increase. The cathode may include such a composite, and thus the internal resistance of the cathode may further decrease. In some embodiments, the cycle characteristics of an all solid secondary battery including such a cathode may be further improved.

$Li_2S$ may have low ionic conductivity, and thus, in order to avoid such a limitation, $Li_2S$ may form a composite together with lithium salt. The composite of $Li_2S$ and the lithium salt or the composite of $Li_2S$, the lithium salt, and the carbon-based material may provide improved ionic conductivity as compared with $Li_2S$ alone. A content (e.g., amount) of $Li_2S$ in the composite may be in a range of about 50 wt% to about 95 wt%, about 50 wt% to about 90 wt%, about 50 wt% to about 80 wt%, or about 50 wt% to about 70 wt% of the total weight of the composite of $Li_2S$ and the lithium salt. The composite has a content (e.g., amount) of $Li_2S$ in such a range, and thus a cathode having improved ionic conductivity and improved durability may be prepared. A content (e.g., amount) of the lithium salt in the composite of $Li_2S$ and the lithium salt may be in a range of about 5 wt% to about 50 wt%, about 10 wt% to about 50 wt%, about 20 wt% to about 50 wt%, or about 30 wt% to about 50 wt% of the total weight of the composite of $Li_2S$ and the lithium salt.

A molar ratio of $Li_2S$ to the lithium salt in the composite may be, for example, in a range of about 50:50 to about

95:5, about 60:40 to about 95:5, about 60:40 to about 90:10, about 65:35 to about 90:10, about 65:35 to about 85:15, or about 70:30 to about 85:15. The molar ratio of $Li_2S$ to the lithium salt in the composite may be, for example, in a range of about 50:50 to about 95:5, about 50:50 to about 90:10, about 50:50 to about 85:15, about 50:50 to about 80:20, about 50:50 to 75:25, or about 50:50 to about 70:30. The molar ratio of $L_2S$ to the lithium salt may be in such a range, and thus the cycle characteristics of a lithium battery including a composite cathode active material may be further improved. If (e.g., when) a mole fraction of $Li_2S$ is excessively high, an effect of improving ionic conductivity by the lithium salt may be insignificant. If (e.g., when) the mole fraction of $Li_2S$ is excessively low, the energy density of an all solid secondary battery including a composite cathode active material may decrease.

A Mohs hardness of each of the lithium salt and the carbon-based material may be greater than that of $Li_2S$. The Mohs hardness of $Li_2S$ may be, for example, 0.6 or less. The Mohs hardness of the lithium salt may be 0.7 or more, 0.8 or more, 0.9 or more, 1.0 or more, 1.5 or more, or 2.0 or more. The lithium salt may have a Mohs hardness in such a range so that $Li_2S$ may be more easily pulverized during a milling process, and the solid solution of $Li_2S$ and the lithium salt may be more easily formed. A Mohs hardness of LiI may be, for example, about 2.0. The Mohs hardness of the carbon-based material may be 0.7 or more, 0.8 or more, 0.9 or more, 1.0 or more, 1.2 or more, or 1.5 or more. The carbon-based material may have a Mohs hardness in such a range so that $Li_2S$ may be more easily pulverized during a milling process, and the composite of $Li_2S$, the lithium salt, and the carbon-based material may be more easily formed. A Mohs hardness of CNFs may be, for example, about 1.5.

A content (e.g., amount) of the lithium salt in the composite of $Li_2S$, the lithium salt, and the carbon-based material may be, for example, in a range of about 1 wt% to about 40 wt%, about 5 wt% to about 35 wt%, about 10 wt% to about 35 wt%, about 15 wt% to about 35 wt%, about 20 wt% to about 35 wt%, or about 25 wt% to about 35 wt% of the total weight of the composite of $Li_2S$, the lithium salt, and the carbon-based material. If (e.g., when) the content (e.g., amount) of the lithium salt excessively increases (e.g., is substantially high, or higher than the highest end of the ranges), the energy density of an all solid secondary battery may decrease. If (e.g., when) the lithium salt is excessively low, the ionic conductivity of the composite of $Li_2S$, the lithium salt, and the carbon-based material may decrease so that the internal resistance of a dry cathode film may increase. In some embodiments, the cycle characteristics of an all solid secondary battery including a dry cathode film may deteriorate.

In the composite of $Li_2S$, the lithium salt, and the carbon-based material, a molar ratio of $Li_2S$ to the lithium salt may be, for example, in a range of about 50:50 to about 95:5, about 60:40 to about 95:5, about 60:40 to about 90:10, about 65:35 to about 90:10, about 65:35 to about 85:15, or about 70:30 to about 85:15. In the composite of $Li_2S$, the lithium salt, and the carbon-based material, the molar ratio of $Li_2S$ to the lithium salt may be, for example, in a range of about 50:50 to about 95:5, about 50:50 to about 90:10, about 50:50 to about 85:15, about 50:50 to about 80:20, about 50:50 to about 75:25, or about 50:50 to about 70:30. The molar ratio of $Li_2S$ to the lithium salt may be in such a range, and thus the cycle characteristics of an all solid lithium battery including a dry cathode film may be further improved. If (e.g., when) a mole fraction of $Li_2S$ is excessively high, an effect of improving ionic conductivity by the lithium salt may be insignificant. If (e.g., when) the mole fraction of $Li_2S$ is excessively low, the energy density of a lithium battery including a composite cathode active material may decrease.

An ionic conductivity of the composite of $Li_2S$ and the lithium salt or the composite of $Li_2S$, the lithium salt, and the carbon-based material may be, for example, $1\times10^{-5}$ Siemens per centimeter (S/cm) or more, $2\times10^{-5}$ S/cm or more, $4\times10^{-5}$ S/cm or more, $6\times10^{-5}$ S/cm or more, $8\times10^{-5}$ S/cm, or $1\times10^{-4}$ S/cm or more at 25 Image. Ionic conductivity may be measured by utilizing, for example, electrochemical impedance spectroscopy, a direct current (DC) polarization method, and/or the like. The composite of $Li_2S$ and the lithium salt has ionic conductivity in such a range, and thus the internal resistance of the cathode including the composite of $Li_2S$ and the lithium salt may further decrease. The cycle characteristics of an all solid secondary battery including the cathode may be improved.

A $Li_2S$-containing composite may further include a solid electrolyte. The solid electrolyte may further include a sulfide-based solid electrolyte.

A content (e.g., amount) of the composite of $Li_2S$ and the lithium salt may be, for example, in a range of about 0.1 wt% to about 20 wt%, about 0.5 wt% to about 20 wt%, about 0.5 wt% to about 15 wt%, about 0.5 wt% to about 10 wt%, or about 1 wt% to about 5 wt% of the total weight of the composite of $Li_2S$ and the lithium salt, and the sulfide-based solid electrolyte. The content (e.g., amount) of the composite of $Li_2S$ and the lithium salt may be, for example, in a range of about 0.1 wt% to about 20 wt%, about 0.5 wt% to about 20 wt%, about 0.5 wt% to about 15 wt%, about 0.5 wt% to about 10 wt%, or about 1 wt% to about 5 wt% of the total weight of the cathode. If (e.g., when) the cathode has a content (e.g., amount) of the composite of $Li_2S$ and the lithium salt in such a range, the durability of the cathode may be further improved, and the internal resistance thereof may be further decreased.

The cathode active material layer may include, for example, composite particles of $Li_2S$ and a lithium salt and sulfide-based solid electrolyte particles. For example, a size of the composite particles of $Li_2S$ and the lithium salt may be smaller than a size of the sulfide-based solid electrolyte particles. The size of the composite particles of $Li_2S$ and the lithium salt may be, for example, 90 % or less, 80 % or less, 60 % or less, 40 % or less, 20 % or less, or 10 % or less of the size of the sulfide-based solid electrolyte particles. The composite particles of $Li_2S$ and the lithium salt may be provided, for example,

in pores between a plurality of sulfide-based solid electrolytes. The composite particles of $Li_2S$ and the lithium salt may be provided in the pores between the plurality of sulfide-based solid electrolytes so that the formation of pinholes in the cathode may suppressed or reduced, and the internal resistance of the cathode may be decreased. In some embodiments, the durability of the cathode may be improved.

The size of the sulfide-based solid electrolyte particles may be, for example, in a range of about 1 μm to about 10 μm, about 1 μm to about 8 μm, about 1 μm to about 6 μm, about 1 μm to about 5, or about 1 μm to about 3 μm. The sulfide-based solid electrolyte particles may have a size in such a range, and thus the durability of the cathode may be further improved. The size of the sulfide-based solid electrolyte particles may be measured by utilizing, for example, laser diffraction, a SEM, and/or the like. The size of the sulfide-based solid electrolyte particles may be an arithmetic average of particle diameters of a plurality of particles measured, for example, in a SEM image by utilizing software.

The size of the composite particles of $Li_2S$ and the lithium salt may be, for example, 2 μm or less, 1.5 μm or less, or 1 μm or less. The size of the composite particles of $Li_2S$ and the lithium salt may be, for example, in a range of about 0.1 μm to about 2 μm, about 0.1 μm to about 1.5 μm, or about 0.1 μm to about 1 μm. The composite particles of $Li_2S$ and the lithium salt may have a size in such a range so that the composite particles may be more easily provided in the pores between the plurality of sulfide-based solid electrolytes, the formation of pinholes in the cathode may be suppressed or reduced, and the internal resistance of the cathode may be decreased. In some embodiments, the durability of the cathode may be improved. The size of the composite particles of $Li_2S$ and the lithium salt may be measured by utilizing, for example, laser diffraction, a SEM, and/or the like. The size of the composite of $Li_2S$ and the lithium salt may be an arithmetic average of particle diameters of a plurality of particles measured, for example, from a SEM image by utilizing software.

A ratio of the size of the sulfide-based solid electrolyte particles to the size of the composite particles of $Li_2S$ and the lithium salt may be, for example, in a range of about 2:1 to about 200:1, about 2:1 to about 100:1, or about 2:1 to about 50:1. The ratio of the size of the sulfide-based solid electrolyte particles to the size of the $Li_2S$ and the lithium salt composite particles may be in such a range, and thus the occurrence of defects in the cathode may be suppressed or reduced, thereby further improving the durability of the cathode. If (e.g., when) the ratio of the size of the sulfide-based solid electrolyte particles to the size of the composite particles of the $Li_2S$ and the lithium salt is excessively small, the porosity of the cathode may excessively increase, thereby reducing the durability of the cathode. If (e.g., when) the ratio of the size of the sulfide-based solid electrolyte particles to the size of the composite particles of $Li_2S$ and the lithium salt is excessively large, it may be difficult to uniformly disperse the composite particles of $Li_2S$ and the lithium salt in the cathode.

If (e.g., when) the cathode containing the herein-described composite is utilized, a lithium metal anode may not be utilized as an anode, and thus an anode-free all solid secondary battery may be utilized, thereby providing an all solid secondary battery having improved energy density. The composite cathode active material may include the composite, and thus the cycle characteristics of an all solid secondary battery including the composite cathode active material may be improved. For example, the high-rate characteristics of a secondary battery including the composite cathode active material may be improved.

A solid electrolyte in the cathode active material layer may be, for example, a sulfide-based solid electrolyte. A solid electrolyte included in the cathode may be the same as or different from a solid electrolyte included in an electrolyte layer. A D50 average particle diameter of the solid electrolyte included in the cathode active material layer may be less than a D50 average particle diameter of the solid electrolyte included in the electrolyte layer. For example, the D50 average particle diameter of the solid electrolyte included in the cathode active material layer may be 90 % or less, 80 % or less, 70 % or less, and 60 % or less, 50 % or less, 40 % or less, 30 % or less, or 20 % or less of the D50 average particle diameter of the solid electrolyte included in the electrolyte layer. The D50 average particle diameter may be, for example, a median particle diameter (D50). The median particle diameter (D50) may be a particle size corresponding to a 50 % cumulative volume if (e.g., when) a particle size distribution measured through a laser diffraction method is calculated from particles having a smaller particle size.

The solid electrolyte may be included in a range of about 10 parts by weight to about 60 parts by weight, about 10 parts by weight to about 50 parts by weight, about 20 parts by weight to about 50 parts by weight, or about 30 parts by weight to about 50 parts by weight with respect to 100 parts by weight of the cathode active material layer.

### All solid secondary battery

An all solid secondary battery according to some embodiments may include a cathode, an anode, and a solid electrolyte layer provided between the cathode and the anode. The all solid secondary battery may include an interlayer according to some embodiments between the solid electrolyte layer and the anode.

Referring to FIGS. 1 to 5, an all solid secondary battery 1 may include a cathode 10, an anode 20, and an electrolyte layer 30 provided between the cathode 10 and the anode 20. An interlayer 31 according to some embodiments may be included between the anode 20 and the electrolyte layer 30.

**Cathode**

**Cathode: Cathode active material**

Referring to FIGS. 1 to 5, the cathode 10 may include a cathode current collector 11, and a cathode active material layer 12 provided on a surface (e.g., at least one surface (e.g., or on two (e.g., opposite) surfaces)) of the cathode current collector 11. The cathode active material layer 12 may include $Li_2S$, a $Li_2S$ composite, or a combination thereof as a cathode active material.

The cathode active material layer 12 may additionally include other cathode active materials in addition to the described-herein cathode active material.

Other cathode active materials may include, for example, a $Li_2S$-containing composite. The $Li_2S$-containing composite may include, for example, a composite of $Li_2S$ and carbon, a composite of $Li_2S$, a carbon, and a solid electrolyte, a composite of $Li_2S$ and a solid electrolyte, a composite of $Li_2S$, lithium salt, and carbon, a composite of $Li_2S$ and a metal carbide, a composite of $Li_2S$, carbon, and a metal carbide, a composite of $Li_2S$ and a metal nitride, a composite of $Li_2S$, a carbon, and a metal nitride, or a combination thereof.

The composite of $Li_2S$ and carbon may include carbon, and carbon refers to the carbon-based material of the $Li_2S$ composite described herein. A method of preparing the composite of $Li_2S$ and carbon may be a dry method, a wet method, or a combination thereof, but is not limited thereto. In the related art, the method of preparing the composite of $Li_2S$ and carbon may include, for example, milling, heat treatment, deposition, and/or the like, but one or more embodiments are not limited thereto. Any method may be utilized as long as the method may be utilized in the related art.

The composite of $Li_2S$, carbon, and the solid electrolyte may include carbon and the solid electrolyte. Carbon may be defined as for the herein-described composite of $Li_2S$ and carbon. The solid electrolyte may be, for example, an amorphous solid electrolyte, and any suitable material may be utilized as long as the material may be utilized as an ion conductive material in the related art. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may include, for example, Li, S, and P and may optionally further include a halogen element. The sulfide-based solid electrolyte may be selected from among sulfide-based solid electrolytes utilized in a solid electrolyte layer. For example, the sulfide-based solid electrolyte may have an ionic conductivity of $1\times10^{-5}$ S/cm or more at room temperature. The sulfide-based solid electrolyte may include, for example, at least one selected from among $Li_3PO_4$-$Li_2SO_4$, $Li_2S$-$P_2S_5$, $Li_2S$-$P_2S_5$-LiX, wherein X is a halogen element, $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$, wherein m and n are each a positive number and Z is one of Ge, Zn, and Ga, $Li_2S$-$GeS_2$, $Li_2S$-$SiS_2$-$Li_3PO_4$, $Li_2S$-$SiS_2$-$Li_pMO_q$, wherein p and q are each a positive number and M is one of P, Si, Ge, B, Al, Ga, and In, $Li_{7-x}PS_{6-x}Cl_x$, wherein $0\leq x\leq2$, $Li_{7-x}PS_{6-x}Br_x$, wherein $0\leq x\leq2$, and $Li_{7-x}PS_{6-x}I_x$, wherein $0\leq x\leq2$. The oxide-based solid electrolyte may include, for example, Li, O, and a transition metal element and may optionally further include other elements. For example, the oxide-based solid electrolyte may be a solid electrolyte having an ionic conductivity of $1\times10^{-5}$ S/cm or more at room temperature. The oxide-based solid electrolyte may be selected from among oxide-based solid electrolytes utilized in the solid electrolyte layer. The solid electrolyte may be, for example, a mixture of a sulfide-based solid electrolyte and a lithium salt. For example, the solid electrolyte may include a mixture of $Li_3PO_4$-$Li_2SO_4$ and binary lithium salt or a mixture of $Li_3PO_4$-$Li_2SO_4$ and a ternary lithium salt.

The composite of $Li_2S$ and the solid electrolyte may include the solid electrolyte. The solid electrolyte may be defined as for the herein-described composite of $Li_2S$, carbon, and the solid electrolyte.

The composite of $Li_2S$, the lithium salt, and carbon may include a lithium salt compound and carbon. The lithium salt compound may not include (e.g., may exclude), for example, a sulfur (S) atom. The lithium salt compound may be, for example, a binary compound including lithium and one type or kind of element selected from Groups 13 to 17 of the periodic table of elements. The binary compound may include, for example, at least one selected from among LiF, LiCl, LiBr, LiI, LiH, $Li_2S$, $Li_2O$, $Li_2Se$, $Li_2Te$, LisN, LisP, LisAs, $Li_3Sb$, $LiI_3$, and LiBs. The lithium salt compound may be, for example, a ternary compound including lithium and two types (kinds) of elements selected from among Groups 13 to 17 of the periodic table of elements. The ternary compound may include, for example, at least one selected from among $Li_3OCl$, $LiPF_6$, $LiBF_4$, $LiSbF_6$, $LiAsF_6$, $LiClO_4$, $LiAlO_2$, $LiAlCl_4$, LiNOs, $Li_2CO_3$, $LiBH_4$, $Li_2SO_4$, $Li_3BO_3$, $Li_3PO_4$, $Li_4NCl$, $Li_5NCl_2$, and $Li_3BN_2$. The lithium salt compound may include at least one lithium halide compound selected from among LiF, LiCl, LiBr, and LiI. Carbon may be defined as for the herein-described composite of $Li_2S$ and carbon.

The composite of $Li_2S$ and the metal carbide may include the metal carbide. The metal carbide may be, for example, a two-dimensional metal carbide. The two-dimensional metal carbide may be, for example, MXene. The two-dimensional metal carbide may be represented, for example, by $M_{n+1}C_nT_x$, wherein M is a transition metal, T is an end group, T is O, OH, and/or F, n=1, 2, or 3, and x is the number of end groups. The two-dimensional metal carbide may be, for example, $Ti_2CT_x$, $(Ti_{0.5}, Nb_{0.5})_2CT_x$, $Nb_2CT_x$, $V_2CT_x$, $Ti_3C_2T_x$, $(V_{0.5}, Cr_{0.5})_3C_2T_x$, $Ti_3CNT_x$, $Ta_4C_3T_x$, $Nb_4C_3T_x$, or a

combination thereof. Here, Tx represents different terminal groups, and for example, Tx is -O, - OH or/and -F functional (or terminal) group. A surface of the two-dimensional metal carbide may be terminated with O, OH, and/or F.

The composite of $Li_2S$, carbon, and the metal carbide may include carbon and the metal carbide. Carbon may be defined as for the herein-described composite of $Li_2S$ and carbon. The metal carbide may be defined as for the herein-described composite of $Li_2S$ and the metal carbide.

The composite of $Li_2S$ and the metal nitride may include the metal nitride. The metal nitride may be, for example, a two-dimensional metal nitride. The two-dimensional metal nitride may be represented, for example, by $M_{n+1}N_nT_x$, wherein M is a transition metal, T is an end group, T is O, OH, and/or F, n=1, 2, or 3, and x is the number of end groups. A surface of the two-dimensional metal nitride may be terminated with O, OH, and/or F.

The composite of $Li_2S$, carbon, and the metal nitride may include carbon and the metal nitride. Carbon may be defined as for the herein described composite of $Li_2S$ and carbon. The metal carbide may be defined as for the herein-described composite of $Li_2S$ and the metal nitride.

A size of the cathode active material may be, for example, in a range of about 0.1 μm to about 50 μm, about 0.5 μm to about 30 μm, about 0.5 μm to about 20 μm, or about 1 μm to about 10 μm. A size of $Li_2S$ may be, for example, in a range of about 1 nm to about 10 μm, about 10 nm to about 5 μm, about 10 nm to about b3 μm, or about 10 nm to about 1 μm. A size of the $Li_2S$-containing composite may be, for example, in a range of about 0.1 μm to about 50 μm, about 0.5 μm to about 30 μm, about 0.5 μm0 to about 20 μm, or about 1 μm to about 10 μm.

For example, the cathode active material layer 12 may additionally include a sulfide-based compound that is distinguished from the herein-described cathode active material. The sulfide-based compound may be, for example, a compound including a sulfur element and a metal element other than Li. For example, the sulfide-based compound may be a compound including a sulfur element and at least one of metal elements which have an atomic weight of 10 or more and belong to Groups 1 to 14 of the periodic table of elements. The sulfide-based compound may be, for example, $FeS_2$, $VS_2$, NaS, MnS, FeS, NiS, CuS, or a combination thereof. The cathode active material layer 12 may additionally include the sulfide-based compound so that the cycle characteristics of an all solid secondary battery may be further improved. A content (e.g., amount) of the sulfide-based compound included in the cathode active material layer 12 may be 10 wt% or less, 5 wt% or less, 3 wt% or less, or 1 wt% or less of the total weight of the cathode active material layer 12.

The cathode active material may have, for example, a particulate shape such as a spherical shape or an oval shape. A particle diameter of the cathode active material is not limited and may be in a range applicable to a cathode active material of an all solid secondary battery according to a related art. The content (e.g., amount) of the cathode active material in the cathode 10 is also not limited and is in a range applicable to a cathode of an all solid secondary battery according to a related art. A content (e.g., amount) of the cathode active material included in the cathode active material layer 12 may be, for example, in a range of about 30 wt% to about 99 wt%, about 30 wt% to about 90 wt%, about 30 wt% to about 80 wt%, about 30 wt% to about 70 wt%, or about 30 wt% to about 50 wt% of the total weight of the cathode active material layer 12.

### Cathode: Conductive material

The cathode active material layer 12 may further include a conductive material. The conductive material may be, for example, a carbon-based conductive material, a metal-based conductive material, or a combination thereof. The carbon-based conductive material may be, for example, graphite, CB, AB, KB, a carbon fiber, or a combination thereof, but one or more embodiments are not limited thereto. Any suitable material may be utilized as long as the material may be utilized as a carbon-based conductive material in the related art. The metal-based conductive material may be a metal powder, a metal fiber, or a combination thereof, but one or more embodiments are not limited thereto. Any suitable material may be utilized as long as the material may be utilized as a metal-based conductive material in the related art. A content (e.g., amount) of the conductive material included in the cathode active material layer 12 may be, for example, in a range of about 1 wt% to about 30 wt%, about 1 wt% to about 20 wt%, or about 1 wt% to about 10 wt% of the total weight of the cathode active material layer 12.

### Cathode: Binder

The cathode active material layer 12 may further include a binder. The binder may include, for example, styrene butadiene rubber (SBR), polytetrafluoroethylene, polyvinylidene fluoride, polyethylene (PE), and/or the like, but one or more embodiments are not limited thereto. Any suitable material may be utilized as long as the material may be utilized as a binder in the related art. A content (e.g., amount) of the binder included in the cathode active material layer 12 may be, for example, in a range of about 1 wt% to about 10 wt% of the total weight of the cathode active material layer 12. The binder may not be provided.

**Cathode: Other additives**

In addition to the herein-described cathode active material, solid electrolyte, binder, and conductive material, the cathode active material layer 12 may further include, for example, additives such as a filler, a coating agent, a dispersant, and an ion-conductive adjuvant.

As a filler, a coating agent, a dispersant, an ion-conductive adjuvant, and/or the like that may be included in the cathode active material layer 12, suitable materials generally utilized in electrodes of all solid secondary batteries may be utilized.

**Cathode: Cathode current collector**

The cathode current collector 11 may be provided as a plate, foil, and/or the like consisting of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may not be provided. A thickness of the cathode current collector 11 may be, for example, in a range of about 1 μm to about 100 μm, about 1 μm to about 50 μm, about 5 μm to about 25 μm, or about 10 μm to about 20 μm.

The cathode current collector 11 may include, for example, a base film and a metal layer provided on a surface (e.g., at least one surface (e.g., or on two (e.g., opposite) surfaces)) of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. The base film may include an insulating thermoplastic polymer, and thus, if (e.g., when) a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may serve as an electrochemical fuse and may be cut if (e.g., when) an overcurrent occurs, thereby performing a short circuit prevention function. A thickness of the metal layer may be adjusted to adjust a limit current and a maximum current. The metal layer may be plated or deposited on the base film. If (e.g., when) the thickness of the metal layer decreases, a limit current and/or a maximum current of the cathode current collector 11 may decrease, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, a metal chip may be added between the metal layer and the lead tab. The metal chip may be a flake consisting of the same material as a metal of the metal layer. The metal chip may be, for example, metal foil or a metal mesh. The metal chip may be, for example, aluminum foil, copper foil, or SUS foil. The metal chip may be provided on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, in a range of about 1 μm to μm 50 μm, about 1.5 μm to about 50 μm, about 1.5 μm to about 40 μm, or about 1 μm to about 30 μm. The base film may have a thickness in such a range, and thus a weight of an electrode assembly may be more effectively reduced. A melting point of the base film may be, for example, in a range of about 100 °C to about 300 °C, about 100 °C to about 250 °C, or about 100 °C to about 200 °C. The base film may have a melting point in such a range, and thus the base film may be melted and easily coupled to the lead tab in a process of welding the lead tab. In order to improve adhesive strength between the base film and the metal layer, surface treatment such as corona treatment may be performed on the base film. A thickness of the metal layer may be, for example, in a range of about 0.01 μm to about 3 μm, about 0.1 μm to about 3 μm, about 0.1 μm to about 2 μm, or about 0.1 μm to about 1 μm. The metal layer may have a thickness in such a range, and thus the stability of an electrode assembly may be secured while conductivity is maintained. A thickness of the metal chip may be, for example, in a range of about 2 μm to about 10 μm, about 2 μm to about 7 μm, or about 4 μm to about 6 μm. The metal chip may have a thickness in such a range, and thus the metal layer and the lead tab may be more easily connected. The cathode current collector 11 may have such a structure, and thus a weight of the cathode 10 may be reduced, thereby improving the energy density of the cathode 10 and an all solid secondary battery.

**Cathode: Inactive member**

Referring to FIGS. 4 and 5, the cathode 10 may include the cathode current collector 11, and the cathode active material layer 12 provided thereon. A carbon coating layer may be provided between the cathode current collector 11 and the cathode active material layer 12. An interlayer may be further provided between the carbon coating layer and the

cathode active material layer 12 provided (e.g., positioned) thereon.

An inactive member 40 may be provided on one side surface of the cathode 10. Referring to FIG. 4, the inactive member 40 may be provided on one side surface of each of the cathode active material layer 12 and the cathode current collector 11. Referring to FIG. 5, the inactive member 40 may be provided on a (e.g., one) side surface of the cathode active material layer 12 and may also be provided between the electrolyte layer 30 and (e.g., a side or surface of (e.g., the bottom side of)) the cathode current collector 11 opposing (e.g., facing) the electrolyte layer 30. The inactive member 40 may not be provided on another (another one) side or surface of the cathode current collector 11 (the other or top side being the side facing oppositely away from the electrolyte layer 30).

The inactive member 40 may be provided to prevent or reduce cracks of the electrolyte layer 30 during manufacturing and/or charging/discharging of an all solid secondary battery 1, thereby improving the cycle characteristics of the all solid secondary battery 1. In the all solid secondary battery 1 that does not include the inactive member 40, a substantially non-uniform pressure may be applied to the electrolyte layer 30 in contact with the cathode 10 during manufacturing and/or charging/discharging of the all solid secondary battery 1 to cause cracks in the electrolyte layer 30, and a lithium metal may be grown through the cracks to increase a possibility of the occurrence of a short circuit.

In the all solid secondary battery 1, a thickness of the inactive member 40 may be greater than or equal to a thickness of the cathode active material layer 12. In other embodiments, in the all solid secondary battery 1, the thickness of the inactive member 40 may be substantially equal to a thickness of the cathode 10. The thickness of the inactive member 40 may be equal to the thickness of the cathode 10, and thus a substantially uniform pressure may be applied between the cathode 10 and the electrolyte layer 30, and the cathode 10 and the electrolyte layer 30 may be in sufficiently close contact with each other, thereby reducing interfacial resistance between the cathode 10 and the electrolyte layer 30. In some embodiments, the electrolyte layer 30 may be sufficiently sintered during a process of pressing and manufacturing the all solid secondary battery 1, thereby reducing the internal resistance of the electrolyte layer 30 and the all solid secondary battery 1 including the same.

The inactive member 40 may be around or surround the side surface of the cathode 10 and may be in contact with the electrolyte layer 30. The inactive member 40 may surround the side surface of the cathode 10 and may be in contact with the electrolyte layer 30, thereby effectively suppressing cracks of the electrolyte layer 30, which are caused in a portion of the electrolyte layer 30, which is not in contact with the cathode 10, by a pressure difference during a pressing process. The inactive member 40 may surround the side surface of the cathode 10 and may be separated from the anode 20, for example, a first anode active material layer 22. The inactive member 40 may surround the side surface of the cathode 10, may be in contact with the electrolyte layer 30, and may be separated from the anode 20. In some embodiments, a possibility of a short circuit occurring due to physical contact between the cathode 10 and the first anode active material layer 22 or a possibility of a short circuit occurring due to the overcharging of lithium may be suppressed or reduced. For example, the inactive member 40 may be provided on one side surface of the cathode active material layer 12 and concurrently (e.g., simultaneously) may be provided on one side surface of the cathode current collector 11, thereby more effectively suppressing a possibility of a short circuit occurring due to contact between the cathode current collector 11 and the anode 20.

Referring to FIGS. 4 and 5, the inactive member 40 may extend from one side surface of the cathode 10 to an end portion of the electrolyte layer 30. The inactive member 40 may extend to the end portion of the electrolyte layer 30 so that cracks occurring at the end portion of the electrolyte layer 30 may be suppressed or reduced. The end portion of the electrolyte layer 30 may be an outermost portion in contact with a side surface of the electrolyte layer 30. The inactive member 40 may extend to the outermost portion in contact with the side surface of the electrolyte layer 30. The inactive member 40 may be separated from the anode 20, for example, the first anode active material layer 22. The inactive member 40 may extend to the end portion of the electrolyte layer 30 but may not be in contact with the anode 20. For example, the inactive member 40 may fill a space extending from one side surface of the cathode 10 to the end portion of the electrolyte layer 30.

Referring FIGS. 4 and 5, a width of the inactive member 40 extending from one side surface of the cathode 10 to the end portion of the electrolyte layer 30 may be, for example, in a range of about 1 % to about 30 %, about 1 % to about 25 %, about 1 % to about 20 %, about 1 % to about 15 %, about 1 % to about 10 %, or about 1 % to about 5 % of a width between one side surface of the cathode 10 and the other side surface opposite to the one side surface. If (e.g., when) the width of the inactive member 40 is excessively wide, the energy density of the all solid secondary battery 1 may decrease. If (e.g., when) the width of the inactive member 40 is excessively narrow, an effect of arranging the inactive member 40 may be insignificant.

An area of the cathode 10 may be smaller than an area of the electrolyte layer 30 in contact with the cathode 10. The inactive member 40 may be provided to surround the side surface of the cathode 10 to compensate for a difference in area between the cathode 10 and the electrolyte layer 30. An area of the inactive member 40 may compensate for the difference between the area of the cathode 10 and the area of the electrolyte layer 30, thereby effectively preventing or reducing cracks of the electrolyte layer 30 caused by a pressure difference during a pressing process. For example, the sum of the area of the cathode 10 and the area of the inactive member 40 may be equal to the area of the electrolyte layer

30. The electrolyte layer 30 may be, for example, a solid electrolyte layer.

The area of the cathode 10 may be, for example, less than 100 %, 99 % or less, 98 % or less, 97 % or less, 96 % or less, or 95 % or less of the area of the electrolyte layer 30. The area of the cathode 10 may be, for example, in a range of about 50 % to less than 100 %, about 50 % to about 99 %, about 55 % to about 98 %, about 60 % to about 97 %, about 70 % to about 96 %, about 80 % to about 95 %, or about 85 % to about 95 %.of the area of the electrolyte layer 30.

If (e.g., when) the area of the cathode 10 is greater than or equal to the area of the electrolyte layer 30, a short circuit may occur due to physical contact between the cathode 10 and the first anode active material layer 22, or a possibility of a short circuit occurring due to the overcharging of lithium may increase. The area of the cathode 10 may be, for example, equal to an area of the cathode active material layer 12. The area of the cathode 10 may be, for example, equal to an area of the cathode current collector 11.

The area of the inactive member 40 may be, for example, 50 % or less, 40 % or less, 30 % or less, 20 % or less, or 10 % or less of the area of the cathode 10. The area of the inactive member 40 may be, for example, in a range of about 1 % to about 50 %, about 5 % to about 40 %, about 5 % to about 30 %, about 5 % to about 20 %, or about 5 % to about 15 % of the area of the cathode 10.

An area S1 of the cathode 10 may be smaller than an area S4 of an anode current collector 21. The area S1 of the cathode 10 may be, for example, less than 100 %, 99 % or less, 98 % or less, 97 % or less, 96 % or less, or 95 % or less of the area S4 of the anode current collector 21. The area S1 of the cathode 10 may be, for example, in a range of about 50 % to less than 100 %, about 50 % to about 99 %, about 55 % to about 98 %, about 60 % to about 97 %, about 70 % to about 96 %, about 80 % to about 95 %, or about 85 % to about 95 % of the area S4 of the anode current collector 21. The area S4 of the anode current collector 21 may be, for example, equal to an area of the anode 20. The area S4 of the anode current collector 21 may be, for example, equal to an area of the first anode active material layer 22.

In the present disclosure, "equal" area, length, width, thickness, and/or shape may include all cases of having "substantially equal" area, length, width, thickness, and/or shape, excluding a case in which areas, lengths, widths, thicknesses, and/or shapes are intentionally different from each other. "Equal" area, length, width, and/or thickness includes a range in which the unintended difference in area, length, width, and/or thickness between compared objects is, for example, less than 3 %, less than 2 %, less than 1 %, less than 0.5 %, or less than 0.1 %.

The thickness of the inactive member 40 may be, for example, greater than a thickness of the first anode active material layer 22. The thickness of the first anode active material layer 22 may be, for example, 50 % or less, 40 % or less, 30 % or less, 20 % or less, or 10 % or less of the thickness of the inactive member 40. The thickness of the first anode active material layer 22 may be, for example, in a range of about 1 % to about 50 %, about 1 % to about 40 %, about 1 % to about 30 %, about 1 % to about 20 %, or about 1 % to about 10 % of the thickness of the inactive member 40.

The inactive member 40 may be a gasket. By utilizing the gasket as the inactive member 40, cracks of the electrolyte layer 30 caused by a pressure difference during a pressing process may be effectively suppressed or reduced.

The inactive member 40 may have, for example, a single-layer structure. In other embodiments, the inactive member 40 may have a multi-layer structure. In the inactive member 40 having the multi-layer structure, respective layers may have different compositions. The inactive member 40 having the multi-layer structure may have, for example, a two-layer structure, a three-layer structure, a four-layer structure, or a five-layer structure. The inactive member 40 having the multi-layer structure may include, for example, one or more adhesive layers and one or more support layers. For example, the adhesive layer may effectively prevent or reduce separation between the cathode 10 and the electrolyte layer 30 due to a change in volume of the cathode 10 which occurs during a charging/discharging process of the all solid secondary battery 1 and may provide a binding force between the support layer and other layers to improve the film strength of the inactive member 40. The support layer may provide a supporting force to the inactive member 40, may prevent or reduce the substantial nonuniformity of pressure applied to the electrolyte layer 30 during a pressing process or a charging/discharging process, and may prevent or reduce the shape deformation of the all solid secondary battery 1 to be manufactured.

The inactive member 40 may be, for example, a flame-retardant inactive member. The flame-retardant inactive member may provide flame retardancy to prevent or reduce a possibility of thermal runaway and ignition of the all solid secondary battery 1. In some embodiments, the safety of the all solid secondary battery 1 may be further improved. The flame-retardant inactive member may be to absorb residual moisture in the all solid secondary battery 1, thereby preventing or reducing the deterioration of the all solid secondary battery 1 and improving the lifespan characteristics of the all solid secondary battery 1.

The flame-retardant inactive member may include, for example, a matrix and a filler. The matrix may include, for example, a substrate and a reinforcing material. The matrix may include, for example, a fibrous substrate and a fibrous reinforcing material. The matrix may include the substrate to have elasticity. In some embodiments, the matrix may effectively accommodate a change in volume of the all solid secondary battery 1 during charging/discharging and may be provided at any one of one or more suitable positions. The substrate included in the matrix may include, for example, a first fibrous material. By including the first fibrous material, the substrate may effectively accommodate a change in volume of the cathode 10 which occurs during a charging/discharging process of the all solid secondary battery 1 and may effectively suppress or reduce the deformation of the inactive member 40 due to the change in volume of the cathode 10. The first

fibrous material may be, for example, a material having an aspect ratio of 5 or more, 20 or more, or 50 or more. The first fibrous material may be, for example, a material having an aspect ratio of about 5 to about 1,000, about 20 to about 1,000, or about 50 to about 1,000. The first fibrous material may be, for example, an insulating material. The first fibrous material may be the insulating material, and thus a short circuit between the cathode 10 and the anode 20, which occurs due to lithium dendrites and/or the like during charging/discharging of the all solid secondary battery 1, may be effectively prevented or reduced. The first fibrous material may include, for example, at least one selected from among a pulp fiber, an insulating polymer fiber, and an ion conductive polymer fiber. The matrix may include the reinforcing material, and thus the strength of the matrix may be improved. In some embodiments, the matrix may prevent or reduce an excessive change in volume of the all solid secondary battery 1 during changing/discharging and may prevent or reduce the deformation of the all solid secondary battery 1. The reinforcing material included in the matrix may include, for example, a second fibrous material. The reinforcing material may include the second fibrous material, and thus the strength of the matrix may more uniformly increase. The second fibrous material may be, for example, a material having an aspect ratio of about 3 or more, about 5 or more, or about 10 or more. The second fibrous material may be, for example, a material having an aspect ratio of about 3 to about 100, about 5 to about 100, or about 10 to about 100. The second fibrous material may be, for example, a flame-retardant material. The second fibrous material may be the flame-retardant material, and thus ignition due to thermal runaway occurring during a charging/discharging process of the all solid secondary battery 1 or an external impact may be effectively suppressed or reduced. The second fibrous material may include, for example, a glass fiber, a metal oxide fiber, or a ceramic fiber.

The flame-retardant inactive member may include a filler in addition to the matrix. The filler may be provided in the matrix, on a surface of the matrix, or both (e.g., simultaneously) in the matrix and on the surface. The filler may include, for example, an inorganic material. The filler included in the flame-retardant inactive member may be, for example, a moisture getter (e.g., hydroscopic). For example, the filler may adsorb moisture at a temperature of less than 100 °C to remove moisture remaining in the all solid secondary battery 1, thereby preventing or reducing the deterioration of the all solid secondary battery 1. In some embodiments, if (e.g., when) a temperature of the all solid secondary battery 1 increases to 150 °C or more due to thermal runaway occurring during a charging/discharging process of the all solid secondary battery 1 or an external impact, the filler may release the adsorbed moisture to effectively suppress or reduce ignition of the all solid secondary battery 1. In other embodiments, the filler may be, for example, a flame retardant. The filler may include, for example, a metal hydroxide having moisture adsorption properties. The metal hydroxide included in the filler may be, for example, $Mg(OH)_2$, $Fe(OH)_3$, $Sb(OH)_3$, $Sn(OH)_4$, $Tl(OH)_3$, $Zr(OH)_4$, $Al(OH)_3$, or a combination thereof. A content (e.g., amount) of the filler included in the flame-retardant inactive member may be, for example, in a range of about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight with respect to 100 parts by weight of the flame-retardant inactive member.

The flame-retardant inactive member may further include, for example, a binder. The binder may include, for example, a curable polymer or a non-curable polymer. The curable polymer may be a polymer that is cured by heat and/or pressure. The curable polymer may be, for example, a solid at room temperature. The flame-retardant inactive member may include, for example, a heat-press curable film and/or a cured product thereof. A heat-press curable polymer may be, for example, TSA-66 by Toray.

The flame-retardant inactive member may additionally include other materials in addition to the herein-described substrate, reinforcing material, filler, and binder. The flame-retardant inactive member may further include, for example, at least one selected from among paper, an insulating polymer, an ion-conductive polymer, an insulating inorganic material, an oxide-based solid electrolyte, and a sulfide-based solid electrolyte. The insulating polymer may be, for example, an olefin-based polymer such as PP or PE.

A density of the substrate or the reinforcing material included in the flame-retardant inactive member may be, for example, in a range of about 10 % to about 300 %, about 10 % to about 150 %, about 10 % to about 140 %, about 10 % to about 130 %, or about 10 % to about 120 % of a density of the cathode active material included in the cathode active material layer 12.

The inactive member 40 may be a member that does not include an electrochemically active material, for example, an electrode active material. The electrode active material may be a material that absorbs/desorbs lithium. The inactive member 40 may be a member consisting of a material utilized in the art other than an electrode active material.

## Anode

### Anode: Anode active material

Referring to FIGS. 1 to 5, the anode 20 may include the anode current collector 21 and the first anode active material layer 22 provided on one surface of the anode current collector 21.

The first anode active material layer 22 may be, for example, a metal layer, and the metal layer may include lithium or a lithium alloy.

In other embodiments, the first anode active material layer 22 may include, for example, an anode active material and a binder.

The anode active material included in the first anode active material layer 22 may be, for example, an anode material that may form an alloy or compound together with lithium.

The anode active material included in the first anode active material layer 22 may have, for example, a particle form (e.g., form of particles). An average particle diameter of the anode active material having the particle form (e.g., form of particles) may be, for example, 4 μm or less, 3 μm or less, 2 μm or less, 1 μm or less, 500 nm or less, 300 nm or less, or 100 nm or less. The average particle diameter of the anode active material having the particle form (e.g., form of particles) may be, for example, in a range of about 10 nm to about 4 μm, about 10 nm to about 3 μm, about 10 nm to about 2 μm, about 10 nm to about 1 μm, about 10 nm to about 500 nm, about 10 nm to about 300 nm, or about 10 nm to about 100 nm. The anode active material may have an average particle diameter in such a range, and thus the reversible absorbing and/or desorbing of lithium may become easier during charging/discharging. The average particle diameter of the anode active material may be, for example, a median diameter (D50) measured by utilizing a laser type or kind particle size distribution meter.

The anode active material included in the first anode active material layer 22 may include, for example, at least one selected from among a carbon-based anode active material and a metal or metalloid anode active material.

The carbon-based anode active material may include, for example, amorphous carbon, crystalline carbon, porous carbon, or a combination thereof.

The carbon-based anode active material may be, for example, amorphous carbon. Examples of the amorphous carbon may include carbon black (CB), acetylene black (AB), furnace black (FB), Ketjen black (KB), graphene, and/or the like, but one or more embodiments are not necessarily limited thereto. Any suitable material may be utilized as long as the material may be classified as amorphous carbon in the related art. The amorphous carbon may be carbon that has no crystallinity or very low crystallinity and may be distinguished from crystalline carbon or graphite-based carbon.

The carbon-based anode active material may be, for example, porous carbon. A pore volume of the porous carbon may be, for example, in a range of about 0.1 cubic centimeter per gram (cc/g) to about 10.0 cc/g, about 0.5 cc/g to about 5 cc/g, or about 0.1 cc/g to about 1 cc/g. An average pore diameter of the porous carbon may be, for example, in a range of about 1 nm to about 50 nm, about 1 nm to about 30 nm, or about 1 nm to about 10 nm. A Brunauer-Emmett-Teller (BET) specific surface area of the porous carbon may be, for example, in a range of about 100 square meter per gram ($m^2/g$) to about 3,000 $m^2/g$.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn), but one or more embodiments are not necessarily limited thereto. Any suitable material may be utilized as long as the material may be utilized as a metal anode active material or a metalloid anode active material which forms an alloy or compound together with lithium in the related art. For example, nickel (Ni) may not form an alloy together with lithium and thus may not be a metal anode active material.

The first anode active material layer 22 may include one type or kind of anode active material selected from among such anode active materials or a mixture of a plurality of different anode active materials. For example, the first anode active material layer 22 may include only amorphous carbon or may include at least one selected from among gold (Au), platinum (Pt), palladium (Pd), silicon (Si), silver (Ag), aluminum (Al), bismuth (Bi), tin (Sn), and zinc (Zn). In other embodiments, the first anode active material layer 22 may include a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of the mixture of amorphous carbon and gold and/or the like may be, for example, in a range of about 99:1 to about 1:99, about 10:1 to about 1:2, about 5:1 to about 1:1, or about 4:1 to about 2:1 (based on weight), but one or more embodiments are not limited to such a range. The mixing ratio may be selected according to the required characteristics of the all solid secondary battery 1. The anode active material may have such a composition, and thus the cycle characteristics of the all solid secondary battery 1 may be further improved.

The anode active material included in the first anode active material layer 22 may include, for example, a mixture of first particles including (e.g., consisting of) amorphous carbon and second particles including (e.g., consisting of) a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In other embodiments, the metalloid may be a semiconductor. A content (e.g., amount) of the second particles may be in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt% with respect to the total weight of the mixture. The second particles may have a content (e.g., amount) in such a range, and thus, for example, the cycle characteristics of the all solid secondary battery 1 may be further improved.

In other embodiments, the first anode active material layer 22 may include a composite anode active material.

The composite anode active material may include, for example, a carbon-based support and a metal-based anode active material supported on the carbon-based support. The composite anode active material may have such a structure so that the localization of the metal-based active material in the first anode active material layer 22 may be prevented or reduced, and the substantially uniform distribution thereof may be obtained. In some embodiments, the cycle characteristics of the all solid secondary battery 1 including the first anode active material layer 22 may be further improved.

The metal-based anode active material supported on the carbon-based support may include, for example, a metal, a metal oxide, a composite of a metal and a metal oxide, or a combination thereof. Examples of the metal may include gold (Au), platinum (Pt), palladium (Pd), silicon (Si), silver (Ag), aluminum (Al), bismuth (Bi), tin (Sn), and tellurium (Te), zinc (Zn), and/or the like. Examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin ( Sn) oxide, tellurium (Te) oxide, zinc (Zn) oxide, and/or the like. The metal oxide may include, for example, $Au_xO_y$, wherein $0<x\leq 2$ and $0<y\leq$, $Pt_xO_y$, wherein $0<x\leq 1$ and $0<y\leq 2$, $Pd_xO_y$, wherein $0<x\leq 1$ and $0<y\leq 1$, $Si_xO_y$, wherein $0<x\leq 1$ and $0<y\leq 2$, $Ag_xO_y$, wherein $0<x\leq 2$ and $0<y\leq 1$, $Al_xO_y$, wherein $0<x\leq 2$ and $0<y\leq 3$, $Bi_xO_y$, wherein $0<x\leq 2$ and $0<y\leq 3$, $Sn_xO_y$, wherein $0<x\leq 1$ and $0<y\leq 3$, $Te_xO_y$, wherein $0<x\leq 1$ and $0<y\leq 3$, $Zn_xO_y$, wherein $0<x\leq 1$ and $0<y\leq 1$, or a combination thereof. The composite of the metal and the metal oxide may include, for example, a composite of Au and $Au_xO_y$, wherein $0<x\leq 2$ and $0<y\leq 3$, a composite of Pt and $Pt_xO_y$, wherein $0<x\leq 1$ and $0<y\leq 2$, a composite of Pd and $Pd_xO_y$, wherein $0<x\leq 1$ and $0<y\leq 1$, a composite of Si and $Si_xO_y$, wherein $0<x\leq 1$ and $0<y\leq 2$, a composite of Ag and $Ag_xO_y$, wherein $0<x\leq 1$ and $0<y\leq 1$, a composite of Al and $Al_xO_y$, wherein $0<x\leq 2$ and $0<y\leq 3$, a composite of Bi and $Bi_xO_y$, wherein $0<x\leq 2$ and $0<y\leq 3$, a composite of Sn and $Sn_xO_y$, wherein $0<x\leq 1$ and $0<y\leq 2$), a composite of Te and $Te_xO_y$, wherein $0<x\leq 1$ and $0<y\leq 3$, a composite of Zn and $Zn_xO_y$, wherein $0<x\leq 1$ and $0<y\leq 1$, or a combination thereof.

The carbon-based support may include, for example, amorphous carbon. Examples of the amorphous carbon may include CB, AB, FB, KB, graphene, activated carbon, CNFs, CNTs, and/or the like, but one or more embodiments are not necessarily limited thereto. Any suitable material may be utilized as long as the material may be classified as amorphous carbon in the related art. The amorphous carbon may be carbon that has no crystallinity or very low crystallinity and may be distinguished from crystalline carbon or graphite-based carbon. A carbonaceous material may be, for example, a carbon-based anode active material.

The composite anode active material may have, for example, a particle form (e.g., form of particles). A particle diameter of the composite anode active material having the particle form (e.g., form of particles) may be, for example, in a range of about 10 nm to about 4 μm, about 10 nm to about 1 μm, about 10 nm to about 500 nm, about 10 nm to about 200 nm, or about 10 nm to about 100 nm. The composite anode active material may have a particle diameter in such a range, and thus the reversible absorbing and/or desorbing of lithium may become easier during charging/discharging. The metal-based anode active material supported on the carbon-based support may have, for example, a particle form (e.g., form of particles). A particle diameter of the metal-based anode active material may be, for example, in a range of about 1 nm to about 200 nm, about 1 nm to about 150 nm, about 5 nm to about 100 nm, or about 10 nm to about 50 nm. The carbon-based support may have, for example, a particle form (e.g., form of particles). A particle diameter of the carbon-based support may be, for example, in a range of about 10 nm to about 2 μm, about 10 nm to about 1 μm, about 10 nm to about 500 nm, about 10 nm to about 200 nm, or about 10 nm to about 100 nm. The carbon-based support may have a particle diameter in such a range and thus may be more uniformly provided in the first anode active material layer 22. The carbon-based support may include, for example, nanoparticles having a particle diameter of 500 nm or less. The particle diameter of the composite anode active material, the particle diameter of the metal-based anode active material, and the particle diameter of the carbon-based support may each be, for example, an average particle diameter. The average particle diameter may be, for example, a median diameter (D50) measured by utilizing a laser type or kind particle size distribution meter. In other embodiments, the average particle diameter may be determined automatically by utilizing software, for example, from an electron microscope image or may be manually determined according to a manual.

**Anode: Binder**

The binder included in the first anode active material layer 22 may be, for example, SBR, polytetrafluoroethylene, polyvinylidene fluoride, PE, a vinylidene fluoride/hexafluoropropylene copolymer, polyacrylonitrile (PAN), polymethyl methacrylate, and/or the like, but one or more embodiments are not necessarily limited thereto. Any suitable material may be utilized as long as the material may be utilized as a binder in the related art may be utilized. The binder may be provided as a single binder or a plurality of different binders.

The first anode active material layer 22 may include the binder and thus may be stabilized on the anode current collector 21. In some embodiments, cracks of the first anode active material layer 22 may be suppressed or reduced despite changes in a volume and/or relative position of the first anode active material layer 22 during a charging/discharging process. For example, if (e.g., when) the first anode active material layer 22 does not include (e.g., excludes) a binder, the first anode active material layer 22 may be easily separated from the anode current collector 21. At a portion of the anode current collector 21 exposed due to the separation of the first anode active material layer 22 from the anode current

collector 21, the anode current collector 21 may be in contact with the electrolyte layer 30, which may cause an increase in possibility of the occurrence of a short circuit. The first anode active material layer 22 may be formed, for example, by applying a slurry, in which a material constituting the first anode active material layer 22 is dispersed, onto the anode current collector 21 and drying the slurry. The first anode active material layer 22 may include the binder, and thus an anode active material may be stably distributed in the slurry. For example, if (e.g., when) the slurry is applied onto the anode current collector 21 through screen printing, the clogging of a screen (for example, clogging by aggregates of an anode active material) may be suppressed or reduced.

**Anode: Other additives**

The first anode active material layer 22 may further include additives utilized in the all solid secondary battery 1, such as a filler, a coating agent, a dispersant, and a conductive adjuvant according to a related art.

**Anode: Solid electrolyte**

The first anode active material layer 22 may further include a solid electrolyte. The solid electrolyte may be, for example, a material selected from solid electrolytes included in the electrolyte layer 30. The solid electrolyte included in the first anode active material layer 22 may serve as a reaction point at which a lithium metal starts to be formed in the first anode active material layer 22, may serve as a space in which the formed lithium metal is stored, or may serve as a path through which lithium ions are transferred. The solid electrolyte may not be provided.

In the first anode active material layer 22, for example, a content (e.g., amount) of the solid electrolyte may be high in a region adjacent to the electrolyte layer 30 and may be low in a region adjacent to the anode current collector 21. The solid electrolyte in the first anode active material layer 22 may have, for example, a concentration gradient in which a concentration decreases from the region adjacent to the electrolyte layer 30 to the region adjacent to the anode current collector 21.

**Anode: First anode active material layer**

A ratio B/A of an initial charge capacity B of the first anode active material layer 22 to an initial charge capacity A of the cathode active material layer 12 may be in a range of about 0.005 to about 0.45. The initial charge capacity of the cathode active material layer 12 may be determined at a maximum charging voltage vs. $Li/Li^+$ from a 1st open circuit voltage (OCV). The initial charge capacity of the first anode active material layer 22 may be determined at about 0.01 V vs. $Li/Li^+$ from a 2nd OCV.

The maximum charging voltage may be determined according to types (kinds) of cathode active materials. The maximum charging voltage may be, for example, about 1.5 V, about 2.0 V, about 2.5 V, about 3.0 V, about 3.5 V, about 4.0 V, about 4.2 V, or about 4.3 V. For example, the maximum charging voltage of $Li_2S$ or the $Li_2S$ composite may be about 2.5 V or about 3.0 V vs. $Li/Li^+$. The ratio B/A of the initial charge capacity B of the first anode active material layer 22 to the initial charge capacity A of the cathode active material layer 12 may be, for example, in a range of about 0.01 to about 0.3, about 0.01 to about 0.2, or about 0.05 to about 0.1. The initial charge capacity ((milliampere hour (mAh)) of the cathode active material layer 12 may be obtained by multiplying a charge specific capacity (milliampere hour per gram (mAh/g)) of the cathode active material by a mass (g) of the cathode active material in the cathode active material layer 12. If (e.g., when) one or more suitable types (kinds) of cathode active materials are utilized, a value of specific charge capacity×mass may be calculated for each cathode active material, and the sum of the values may be the initial charge capacity of the cathode active material layer 12. The initial charge capacity of the first anode active material layer 22 may be also calculated in substantially the same manner. The initial charge capacity of the first anode active material layer 22 may be obtained by multiplying a charge specific capacity (mAh/g) of the anode active material by a mass of the anode active material in the first anode active material layer 22. If (e.g., when) one or more suitable types (kinds) of anode active materials are utilized, a value of specific charge capacity×mass may be calculated for each anode active material, and the sum of the values may be the initial charge capacity of the first anode active material layer 22. The specific charge capacity of each of the cathode active material and the anode active material may be measured by utilizing a solid half-cell that uses a lithium metal as a counter electrode. The initial charge capacity of each of the cathode active material layer 12 and the first anode active material layer 22 may be directly measured by utilizing a solid half-cell at a constant current density, for example, about 0.1 (milliampere per square centimeter ($mA/cm^2$)). The measurement may be performed on a cathode at an operating voltage from a 1st OCV up to a maximum charging voltage of, for example, about 3.0 V (vs. $Li/Li^+$). The measurement may be performed on an anode at an operating voltage from a 2nd OCV up to about 0.01 V for the anode, for example, a lithium metal. For example, a solid half-cell including the cathode active material layer 12 may be charged at a constant current of 0.1 $mA/cm^2$ from a 1st OCV up to about 3.0 V, and a solid half-cell including the first anode active material layer 22 may be charged at a constant current of 0.1 $mA/cm^2$ from a 2nd OCV up to about 0.01 V. A current density during constant current

charging may be, for example, about 0.2 $mA/cm^2$ or about 0.5 $mA/cm^2$. The solid half-cell including the cathode active material layer 12 may be charged, for example, from a 1st OCV up to about 2.5 V, about 2.0 V, about 3.5 V, or about 4.0 V. A maximum charging voltage of a cathode active material layer may be determined by a maximum voltage of a battery that satisfies the safety conditions according to JIS C 8712:2015 of the Japanese Standards Association, the entire content of which is herein incorporated by reference.

If (e.g., when) the initial charge capacity of the first anode active material layer 22 is excessively low, the first anode active material layer 22 may become very thin. As a result, during a repeated charging/discharging processes, lithium dendrites formed between the first anode active material layer 22 and the anode current collector 21 may collapse the first anode active material layer 22, it may become difficult to improve the cycle characteristics of the all solid secondary battery 1. If (e.g., when) the charge capacity of the first anode active material layer 22 excessively increases (e.g., is substantially high, or higher than the highest end of the ranges), the energy density of the all solid secondary battery 1 may decrease, and the internal resistance of the all solid secondary battery 1 (e.g., due to the first anode active material layer 22) may increase. As a result, it may become difficult to improve the cycle characteristics of the all solid secondary battery 1.

The thickness of the first anode active material layer 22 may be, for example, 50 % or less, 40 % or less, 30 % or less, 20 % or less, 10 % or less, or 5 % or less of the thickness of the cathode active material layer 12. The thickness of the first anode active material layer 22 may be, for example, in a range of about 1 % to about 50 %, about 1 % to about 40 %, about 1 % to about 30 %, about 1 % to about 20 %, about 1 % to about 10 %, or about 1 % to about 5 % of the thickness of the cathode active material layer 12. The thickness of the first anode active material layer 22 may be, for example, in a range of about 1 μm to about 20 μm, about 2 μm to about 15 μm, or about 3 μm to about 10 μm.

If (e.g., when) the first anode active material layer 22 is excessively thin (e.g., is substantially thin, or thinner than the lowest end of the ranges), lithium dendrites formed between the first anode active material layer 22 and the anode current collector 21 may collapse the first anode active material layer 22. As a result, it may become difficult to improve the cycle characteristics of the all solid secondary battery 1. If (e.g., when) the thickness of the first anode active material layer 22 excessively increases (e.g., is substantially high, or higher than the highest end of the ranges), the energy density of the all solid secondary battery 1 may decrease, and the internal resistance of the all solid secondary battery 1 (e.g., due to the first anode active material layer 22) may increase. As a result, it may become difficult to improve the cycle characteristics of the all solid secondary battery 1. If (e.g., when) the thickness of the first anode active material layer 22 decreases, for example, the initial charge capacity of the first anode active material layer 22 may also decrease.

**Anode: Second anode active material layer**

Referring to FIG. 3, the all solid secondary battery 1 may further include a second anode active material layer 24 which, after charging, is provided between the anode current collector 21 and the first anode active material layer 22. The second anode active material layer 24 may be a metal layer including lithium or a lithium alloy. The metal layer may include the lithium or the lithium alloy. In some embodiments, the second anode active material layer 24 may be the metal layer including lithium and thus may serve, for example, as a lithium reservoir. Examples of the lithium alloy may include a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but one or more embodiments are not limited to. Any material may be utilized as long as the material may be utilized as a lithium alloy in the art. The second anode active material layer 24 may include (e.g., consist of) one of such alloys or lithium or may include (e.g., consist of) one or more suitable types (kinds) of alloys. The second anode active material layer 24 may be, for example, a plated layer. For example, the second anode active material layer 24 may be plated between the first anode active material layer 22 and the anode current collector 21 during a charging process of the all solid secondary battery 1.

A thickness of the second anode active material layer 24 is not limited, but may be, for example, in a range of about 1 μm to about 500 μm, about 1 μm to about 200 μm, about 1 μm to about 150 μm, about 1 μm to about 100 μm, or about 1 μm to about 50 μm. If (e.g., when) the second anode active material layer 24 is excessively thin (e.g., is substantially thin, or thinner than the lowest end of the ranges), it may be difficult for the second anode active material layer 24 to function as a lithium reservoir. If (e.g., when) the second anode active material layer 24 is excessively thick (e.g., is substantially thick, or thicker than the highest end of the ranges), the mass and volume of the all solid secondary battery 1 may be increased, and the cycle characteristics of the all solid secondary battery 1 may be actually deteriorated.

In other embodiments, in the all solid secondary battery 1, for example, before assembly of the all solid secondary battery 1, the second anode active material layer 24 may be provided between the anode current collector 21 and the first anode active material layer 22. If (e.g., when) the second anode active material layer 24 is provided between the anode current collector 21 and the first anode active material layer 22 before the assembly of the all solid secondary battery 1, the second anode active material layer 24 may be the metal layer including lithium and thus may serve as a lithium reservoir. For example, before the assembly of the all solid secondary battery 1, lithium foil may be provided between the anode current collector 21 and the first anode active material layer 22.

If (e.g., when) the second anode active material layer 24 is plated by the all solid secondary battery 1 being

charged after being assembled, the all solid secondary battery 1 may not include (e.g., may exclude) the second anode active material layer 24 if (e.g., when) the all solid secondary battery 1 is assembled, and thus the energy density of the all solid secondary battery 1 may increase. During charging of the all solid secondary battery 1, the first anode active material layer 22 may be charged beyond a charge capacity thereof. For example, the first anode active material layer 22 may be overcharged. At the beginning of charging, lithium may be adsorbed in the first anode active material layer 22. The anode active material included in the first anode active material layer 22 may form an alloy or compound together with lithium ions that move from the cathode 10. If (e.g., when) charging is performed beyond a capacity of the first anode active material layer 22, for example, lithium may be precipitated on a rear surface of the first anode active material layer 22, for example, between the anode current collector 21 and the first anode active material layer 22, and a metal layer corresponding to the second anode active material layer 24 may be formed by the precipitated lithium. The second anode active material layer 24 may be a metal layer mainly consisting of lithium (for example, metallic lithium). Such a result is obtained, for example, because the anode active material included in the first anode active material layer 22 includes a material that forms an alloy or compound together with lithium. During discharging, lithium in the first anode active material layer 22 and the second anode active material layer 24, for example, lithium in the metal layer, may be ionized to move toward the cathode 10. In some embodiments, in the all solid secondary battery 1, lithium may be utilized as an anode active material. In some embodiments, the first anode active material layer 22 may cover the second anode active material layer 24, thereby serving as a protective layer for the second anode active material layer 24, for example, the metal layer, and concurrently (e.g., simultaneously) serving to suppress or reduce the precipitation growth of lithium dendrites. In some embodiments, a short circuit and a reduction in capacity of the all solid secondary battery 1 may be suppressed or reduced, thereby improving the cycle characteristics of the all solid secondary battery 1. In other embodiments, if (e.g., when) the second anode active material layer 24 is provided if (e.g., when) the all solid secondary battery 1 is charged after being assembled, the anode 20, for example, the anode current collector 21, the first anode active material layer 22, and a region therebetween, may be Li-free regions that do not include lithium (Li) in an initial state of the all solid secondary battery 1 or in a state after full discharging thereof.

**Anode: Anode current collector**

The anode current collector 21 may include (e.g., consist of) a material that does not react with lithium, for example, a material that does not form either or both (e.g., simultaneously) of an alloy and/or a compound together with lithium. Examples of a material to be included (e.g., constituting) the anode current collector 21 may include copper (Cu), stainless steel, titanium (Ti), iron (Fe), cobalt (Co), and/or nickel (Ni), but one or more embodiments are not necessarily limited thereto. Any suitable material may be utilized as long as the material may be utilized an electrode current collector in the related art. The anode current collector 21 may include (e.g., consist of) one type or kind of the herein-described metals, an alloy of two or more types (kinds) of metals, or a coating material. The anode current collector 21 may be, for example, in the form of a plate or foil.

Referring to FIG. 4, the all solid secondary battery 1 may further include a thin film 23, which includes an element capable of forming an alloy together with lithium, on one surface of the anode current collector 21. The thin film 23 may be provided between the anode current collector 21 and the first anode active material layer 22. The thin film 23 may include, for example, an element capable of forming an alloy together with lithium. Examples of the element capable of forming an alloy together with lithium may include gold, silver, zinc, tin, indium, silicon, aluminum, bismuth, and/or the like, but one or more embodiments are not necessarily limited thereto. Any suitable material may be utilized as long as the material may form an alloy together with lithium in the related art. The thin film 23 may include (e.g., consist of) one of such metals or an alloy of one or more suitable types (kinds) of metals. The thin film 23 may be provided on one surface of the anode current collector 21 so that, for example, a plated form of the second anode active material layer 24 plated between the thin film 23 and the first anode active material layer 22 may be further planarized, and the cycle characteristics of the all solid secondary battery 1 may be further improved.

A thickness of the thin film 23 may be, for example, in a range of about 1 nm to about 800 nm, about 10 nm to about 700 nm, about 50 nm to about 600 nm, or about 100 nm to about 500 nm. If (e.g., when) the thickness of the thin film 23 is less than 1 nm, it may be difficult for the thin film 23 to function. If (e.g., when) the film 23 is excessively thick (e.g., is substantially thick, or thicker than the highest end of the ranges), the thin film 23 itself may adsorb lithium, and thus an amount of lithium precipitated at the anode 20 may decrease, resulting in a decrease in energy density of the all solid secondary battery 1 and a decrease in cycle characteristics of the all solid secondary battery 1. The thin film 23 may be provided on the anode current collector 21 through, for example, vacuum deposition, sputtering, plating, and/or the like, but one or more embodiments are not necessarily limited to such a method. Any suitable method capable of forming the thin film 23 in the related art may be utilized.

In some embodiments, the anode current collector 21 may include, for example, a base film and a metal layer provided on a (e.g., at least one surface (e.g., or on two (e.g., opposite) surfaces)) of the base film. The base film may include, for example, a polymer. The polymer may be, for example, a thermoplastic polymer. The polymer may include, for

example, PET, PE, PP, PBT, PI, or a combination thereof. The polymer may be an insulating polymer. The base film may include an insulating thermoplastic polymer, and thus, if (e.g., when) a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. The base film, metal layer, metal chip, and lead tab of the anode current collector 21 may be defined as for the herein-described cathode current collector 11. The anode current collector 21 may have such a structure, and thus a weight of the anode 20 may be reduced, thereby improving the energy density of the anode 20 and a lithium battery.

**Solid electrolyte layer**

**Solid electrolyte layer: Electrolyte**

Referring to FIGS. 1 to 5, the electrolyte layer 30 may be provided between the cathode 10 and the anode 20. The electrolyte layer 30 may further include, for example, a solid electrolyte, a gel electrolyte, or a combination thereof.

The solid electrolyte contained in the electrolyte layer 30 may be a sulfide-based solid electrolyte.

The solid electrolyte additionally included in the electrolyte layer 30 may include, for example, an oxide-based solid electrolyte, a polymer solid electrolyte, or a combination thereof.

The oxide-based solid electrolyte may include, for example, $Li_{1+x+y}Al_xTi_{2-x}Si_yP_{3-y}O_{12}$, wherein $0<x<2$ and $0 \leq y<3$, $BaTiO_3$, $Pb(Zr,Ti)O_3$ (PZT), $Pb_{1-x}La_xZr_{1-y}Ti_yO_3$ (PLZT), wherein $0 \leq x<1$ and $0 \leq y<1$, $PB(Mg_3Nb_{2/3})O_3$-$PbTiO_3$ (PMN-PT), $HfO_2$, SrTiOs, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$, wherein $0<x<2$ and $0<y<3$, $Li_xAl_yTi_z(PO_4)_3$, wherein $0<x<2$, $0<y<1$, and $0<z<3$, $Li_{1+x+y}(Al, Ga)_x(Ti, Ge)_{2-x}Si_yP_{3-y}O_{12}$, wherein $0 \leq x \leq 1$ and $0 \leq y \leq 1$, $Li_xLa_yTiO_3$, wherein $0<x<2$ and $0<y<3$, $Li_2O$, LiOH, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$, wherein M=Te, Nb, or Zr and $0 \leq x \leq 10$, or a combination thereof. The oxide-based solid electrolyte may be prepared, for example, through sintering and/or the like.

The oxide-based solid electrolyte may be, for example, a garnet-type or kind solid electrode selected from among $Li_7La_3Zr_2O_{12}$ (LLZO) and $Li_{3+x}La_3Zr_{2-a}M_aO_{12}$ (LLZO doped with M), wherein M=Ga, W, Nb, Ta, or Al, $0<a<2$, and $0 \leq x \leq 10$.

For example, the polymer solid electrolyte may include a mixture of lithium salt and a polymer or may include a polymer having an ion-conductive functional group. The polymer solid electrolyte may be, for example, a polymer electrolyte that is in a solid state at a temperature of about 25 °C and a pressure of about 1 atm. The polymer solid electrolyte may not include (e.g., may exclude), for example, a liquid. The polymer solid electrolyte may include a polymer, and the polymer may include, for example, polyethylene oxide (PEO), polyvinylidene fluoride (PVDF), vinylidene fluoride-hexafluoropropylene (PVDF-HFP), a poly(styrene-b-ethylene oxide) block or reduce copolymer (PS-PEO), poly(styrene-butadiene), poly(styrene-isoprene-styrene), a poly(styrene-b-divinylbenzene) block or reduce copolymer, a poly(styrene-ethylene oxide-styrene) block or reduce copolymer, polystyrene sulfonate (PSS), polyvinyl fluoride (PVF), poly(methylmethacrylate) (PMMA), polyethylene glycol (PEG), PAN, polytetrafluoroelene (PTFE), polyethylenedioxythiophene (PEDOT), polypyrrole (PPY), PAN, polyaniline, poly acetylene, NAFION™ AQUIVION®, FLEMION®, GORE™, ACIPLEX™, MORGANE®-ADP, sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate ($DPASLi^+$), or a combination thereof, but one or more embodiments are not limited thereto. Any suitable material may be utilized as long as the material may be utilized in a polymer electrolyte in the related art. As the lithium salt, any material may be utilized as long as the material may be utilized as a lithium salt in the art. The lithium salt may include, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$, wherein x and y are each a natural number from 1 to 20, LiCl, LiI, or a mixture thereof. A polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1,000 Dalton or more, 10,000 Dalton or more, 100,000 Dalton or more, or 1,000,000 Dalton or more. In this disclosure, a weight average molecular weight of the polymer is measured by gel permeation chromatography (GPC).

The gel electrolyte may be, for example, a polymer gel electrolyte. The gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer electrolyte that is in a gel state at a temperature of about 25 °C and a pressure of about 1 atm. The polymer gel electrolyte may have, for example, a gel state without including a liquid. The liquid electrolyte utilized in the polymer gel electrolyte may include, for example, a mixture of an ionic liquid, lithium salt, and an organic solvent, a mixture of lithium salt and an organic solvent, a mixture of an ionic liquid and an organic solvent, or a mixture of lithium salt and an ionic liquid. The polymer utilized in the polymer gel electrolyte may be selected from polymers utilized in a solid polymer electrolyte. The

organic solvent may be selected from organic solvents utilized in a liquid electrolyte. The lithium salt may be selected from lithium salts utilized in a polymer solid electrolyte. The ionic liquid may refer to a salt in a liquid state at room temperature or a room-temperature molten salt that has a melting point at room temperature or less and includes (e.g., consists of) only ions. The ionic liquid may include, for example, a compound including a) one cation selected from among an ammonium-based cation, a pyrrolidinium-based cation, pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazole-based cation, and a mixture thereof, and b) at least one anion selected from among $BF_{4-}$, $PF_{6-}$, $AsF_{6-}$, $SbF_{6-}$, $AlCl_4$-, $HSO_4$-, $ClO_4$-, $CH_3SO_3$-, $CF_3CO_2$-, Cl-, Br-, I-, $BF_4$-, $SO_4$-, $CF_3SO_3$-, $(FSO_2)_2N$-, $(C_2F_5SO_2)_2N$-, $(C_2F_5SO_2)(CF_3SO_2)N$-, and $(CF_3SO_2)_2N$-. The polymer solid electrolyte may be impregnated, for example, in a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. A weight average molecular weight of the polymer included in the polymer gel electrolyte may be, for example, 500 Dalton or more, 1,000 Dalton or more, 10,000 Dalton or more, 100,000 Dalton or more, or 1,000,000 Dalton or more.

**Method of manufacturing interlayer and all solid secondary battery**

First, a composition for forming an interlayer may be prepared by mixing an SLICP, an organic solvent, and a liquid electrolyte.

The organic solvent may be a solvent that dissolves an SLICP, and a solvent such as tetrahydrofuran, acetonitrile, methanol, ethanol, dichloromethane, octyl acetate, or NMP may be utilized.

The composition for forming the interlayer may include a monomer for forming an SLICP and an initiator. For example, the composition for forming the interlayer may undergo a polymerization process.

The composition for forming the interlayer may be applied onto a substrate, dried to form an interlayer, and separated from the substrate to be utilized. The drying may be performed at a temperature of about 40 °C to about 90 °C, about 50 °C to about 85°C, or about 70 °C to about 80 °C. A drying time may vary according to a drying temperature, but may be, for example, in a range of about 10 minutes to about 2 hours or about 20 minutes to about 1 hour.

According to other embodiments, the composition for forming the interlayer may be directly applied on an anode 20 to form an interlayer.

In other embodiments, $Li_2S$ or a $Li_2S$ composite may be provided, a sulfide-based solid electrolyte may be provided, the $Li_2S$ composite and the sulfide-based solid electrolyte may be mixed to prepare a mixture, and the mixture may be applied onto a cathode current collector and dried to prepare a cathode.

The $Li_2S$ composite may be provided as a composite of $Li_2S$ and a lithium salt or a composite of $Li_2S$, lithium salt, and a carbon-based material.

The composite of $Li_2S$ and the lithium salt may be prepared, for example, by mechanically milling $Li_2S$ and a lithium salt. Milling conditions are not limited, and any condition may be possible as long as the composite of $Li_2S$ and the lithium may be formed under the condition. A ball mill may be introduced into $Li_2S$ particles and a lithium salt, and the $bLi_2S$ particles and the lithium salt may be stirred at a speed of about 100 rpm to about 1,000 rpm for about 1 hour to about 20 hours to prepare the composite of $Li_2S$ and the lithium salt. The stirring may be performed one or more times.

The lithium salt may include, for example, LiI, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_3$, $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or a combination thereof.

The composite of $Li_2S$, the lithium salt, and the carbon-based material may be prepared, for example, by mechanically milling $Li_2S$ and the lithium salt, adding a carbon-based material to the milled product, and performing milling.

A sulfide-based solid electrolyte may be provided. The composite of $Li_2S$ and the lithium salt and the sulfide-based solid electrolyte may be mixed to prepare a mixture.

A mixing ratio of the $Li_2S$ composite to the sulfide-based solid electrolyte may be, for example, a weight ratio of about 50:50 to about 95:5, about 50:50 to about 90:10, about 50:50 to about 80:20, or about 50:50 to about 70:30.

The mixture may additionally include a process solvent. The mixture may additionally include the process solvent to have a slurry form. A solvent may be, for example, octyl acetate, but one or more embodiments are not limited thereto. Any material may be utilized as long as the material may be utilized as a solvent in the art. In other embodiments, the mixture may be prepared in a dry type or kind without including a process solvent.

Mechanical milling may be utilized during the milling. During the mechanical milling, a ball mill and/or the like may be utilized.

After a solid electrolyte layer is provided between the cathode and the anode, a battery assembly may be obtained and pressed.

The pressing may be, for example, roll pressing, flat pressing and/or the like, but is not necessarily limited to such a method. Any pressing may be utilized as long as the pressing may be utilized in the art. The pressing may not be provided.

The pressing may be performed, for example, at a temperature in a range of room temperature (about 20 °C to about 25 °C) to 90 °C. In other embodiments, the pressing may be performed at a high temperature of 100 °C or more. A time for which the pressing is applied may be, for example, 30 minutes or less, 20 minutes or less, 15 minutes or less, or 10 minutes or less. The time for which the pressing is applied may be in a range of about 1 ms to about 30 minutes, about 1 ms to about 20 minutes, about 1 ms to about 15 minutes, or about 1 ms to about 10 minutes. The pressing may be, for example, isotactic pressing, roll pressing, flat pressing, and/or the like, but is not necessarily limited to such a method. Any suitable pressing may be utilized as long as the pressing may be utilized in the related art. A pressure applied during the pressing may be, for example, 500 megapascal (MPa) or less, for example, 400 MPa or less, 300 MPa or less, 200 MPa or less, or 100 MPa or less. The pressure applied during the pressing may be, for example, in a range of about 50 MPa to about 500 MPa, about 50 MPa to about 400 MPa, about 50 MPa to about 300 MPa, about 50 MPa to about 200 MPa, about 50 MPa to about 100 MPa. Through the pressing, for example, a solid electrolyte powder may be sintered to form a single solid electrolyte.

In the pressing, plate pressing may be performed, for example, at a temperature of about 40 °C to about 100 °C, for example, at a temperature of about 85 °C and a pressure of about 500 MPa for about 30 min. Through the pressing, a solid electrolyte layer may be sintered to improve battery characteristics.

In some embodiments, during the pressuring, a polymerization reaction of a single lithium ion conducting monomer utilized to form the interlayer may proceed to form an SLICP.

Gas may be generated as a result of a reaction during the pressing, and in order to remove the generated gas, a drying process may be additionally performed before a pressing process. Drying may be performed at a temperature of about 40 °C to about 90 °C, about 50 °C to about 85 °C, or about 70 °C to about 80 °C. A drying time may vary according to a drying temperature, but may be, for example, in a range of about 10 minutes to about 2 hours or about 20 minutes to about 1 hour. The drying time may vary according to the drying temperature, but may be, for example, in a range of about10 minutes to about 2 hours or about 20 minutes to about 1 hour.

According to other embodiments, the herein-described pressing may not be provided.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

The present disclosure will be described in more detail through the following Examples and Comparative Examples. However, Examples are for illustrative purposes only, and the scope of the present disclosure is not limited by Examples.

## EXAMPLES

### Preparation of composite of $Li_2S$ and lithium salt

### Preparation Example 1: $Li_2S$-LiI composite

$Li_2S$ and LiI were mixed at a weight ratio of 30:20. The obtained mixture was mechanically milled by utilizing a ball mill to prepare a $Li_2S$-LiI composite. Milling conditions included a temperature of 25 °C, a speed of 600 rpm, and 10 hours.

A size of the $Li_2S$-LiI composite was less than 1 micrometer ($\mu$m). By utilizing software, the size of the $Li_2S$-LiI composite was calculated from a scanning electron microscopy (SEM) image of an $Li_2S$-LiI composite powder. The size of the $Li_2S$-LiI composite is a D50 average particle diameter.

A Mohs hardness of $Li_2S$ was 0.6, and a Mohs hardness of LiI was 2.0. A Mohs hardness of the $Li_2S$-LiI composite was less than 2.

### Preparation Example 2: $Li_2S$-LiBr composite

A $Li_2S$-LiBr composite was prepared in substantially the same manner as Preparation Example 1, except that LiBr was utilized instead of LiI.

**Preparation Example 3: $Li_2S$-LiCl composite**

A $Li_2S$-LiCl composite was prepared in substantially the same manner as Preparation Example 1, except that LiCl was utilized instead of LiI.

**Comparative Preparation Example 1: Simple mixture of $Li_2S$ and LiI**

A mixture of $Li_2S$ and LiI having a weight ratio of 30:20 was utilized without any change.

**Preparation of $Li_2S$-LiI-CNF cathode active material**

**Preparation Example 4: $Li_2S$-LiI-CNF**

$Li_2S$ and LiI were mixed at a weight ratio of 30:20. The obtained mixture was mechanically milled by utilizing a ball mill to prepare a $Li_2S$-LiI composite. Milling conditions included a temperature of 25 °C, a speed of 510 rpm, and 10 hours.

The $Li_2S$-LiI composite and carbon nanofibers (CNFs) were mixed at a weight ratio of 50:10. The obtained mixture was mechanically milled by utilizing a ball mill to prepare a $Li_2S$-LiI-CNF composite. Milling conditions included a temperature of 25 °C, a speed of 510 rpm, and 10 hours.

The $Li_2S$-CNF-LiI composite was utilized as a composite cathode active material.

**Manufacturing of interlayer and all solid secondary battery**

**Example 1: $Li_2S$-LiI-CNF cathode/SE/interlayer (SLICP (LiPSFSI))+liquid**

Electrolyte (IL)/Ag-C anode layer/anode current collector-containing all solid secondary battery

**Preparation of cathode**

The $Li_2S$-LiI-CNF composite prepared in Preparation Example 4 was prepared as a cathode active material. $Li_6PS_5Cl$ (D50=3.0 $\mu$m, crystalline), which was an argyrodite-type or kind (e.g., argyrodite) crystal, was prepared as a solid electrolyte. PTFE was prepared as a binder. Such materials were mixed at a weight ratio of 60:40:1.2 of composite cathode active material:solid electrolyte: binder to prepare a cathode mixture. The cathode mixture was obtained through dry mixing utilizing a ball mill.

The cathode mixture was provided on a one surface of a cathode current collector including or consisting of aluminum foil, of which the one surface (of the aluminum foil) was coated with carbon, and was plate-pressed at a pressure of 200 megapascal (MPa) for 10 minutes to prepare a cathode. A thickness of the cathode was about 120 $\mu$m. A thickness of a cathode active material layer was about 100 $\mu$m, and a thickness of the carbon-coated aluminum foil was about 20 $\mu$m. An area (e.g., surface area) of the cathode active material layer was equal to an area (e.g., surface area) of the cathode current collector.

**Preparation of anode**

SUS (stainless steel) foil having a thickness of 10 $\mu$m was prepared as an anode current collector. As an anode active material, carbon black (CB) particles with a primary particle diameter of about 30 nanometer (nm), and silver (Ag) particles with an average particle diameter of about 60 nm were prepared.

4 g of a mixed powder obtained by mixing the CB particles and the silver (Ag) particles at a weight ratio of 3:1 was put into a container, and 4 g of an N-methyl-2-pyrrolidone (NMP) solution including 7 wt% of a polyvinylidene fluoride (PVDF) binder (#9300 manufactured by Kureha Corporation) was added thereto to prepare a mixed solution. While NMP was added little by little to the prepared mixed solution, the mixed solution was stirred to prepare a slurry. The prepared slurry was applied onto a SUS sheet by utilizing a bar coater, dried in air at a temperature of 80 °C for 10 minutes, and then vacuum-dried at a temperature of 40 °C for 10 hours to prepare a stack. The prepared stack was cold-roll-pressed to planarize a surface thereof, thereby preparing an anode having a first anode active material layer/anode current collector structure. A thickness of the first anode active material layer was about 15 $\mu$m. An area (e.g., surface area) of the first anode active material layer was equal to an area (e.g., surface area) of the anode current collector.

**Preparation of interlayer**

Lithium poly[(4-styrenesulfonyl)(fluorosulfonyl)imide] (LiPSFSI) as a single lithium ion conducting polymer

(SLICP) represented by Formula 6 was dissolved in octyl acetate which is an organic solvent, and then a liquid electrolyte was mixed therewith to prepare a composition for forming an interlayer. A content (e.g., amount) of the organic solvent was 20 parts by weight with respect to 100 parts by weight of the LiPSFSI, and a content (e.g., amount) of the liquid electrolyte was about 15 parts by weight with respect to 100 parts by weight of the composition for forming the interlayer.

Formula 6

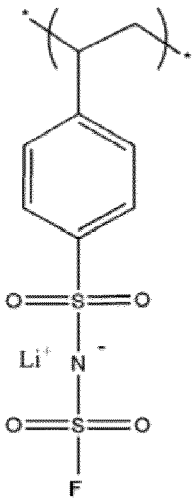

A weight average molecular weight of the LiPSFSI was about 10,000. The polymer LiPSFSI was obtained according to a manufacturing method disclosed in cited literature 1 (RSC Advances, 6(39), 32454-32461), the entire content of which is herein incorporated by reference. As the liquid electrolyte, a mixed solvent of ethylene carbonate (EC), dimethyl carbonate (DMC), and ethyl methyl carbonate (EMC) (weight ratio of 1:1:0.5) in which 1.3 M $LiPF_6$ was dissolved, was utilized.

Such a composition was applied onto a polytetrafluoroethylene (PTFE) mold as a substrate and dried to form an interlayer having a thickness of about 30 μm from the PTFE mold, and then the interlayer was separated from the substrate and utilized.

**Preparation of solid electrolyte layer**

A mixture was prepared by adding 1.5 parts by weight of an acrylic-based binder with respect to 98.5 parts by weight of a solid electrolyte to a $Li_6PS_5Cl$ solid electrolyte (D50=3.0 μm, crystalline) which was an argyrodite-type or kind (e.g., argyrodite) crystal. Octyl acetate was added to the prepared mixture and stirred to prepare a slurry. The prepared slurry was applied onto a 15 μm-thick non-woven fabric placed on a 75 μm-thick polyethylene terephthalate (PET) substrate by utilizing a bar coater and dried in air at a temperature of 80 °C for 10 minutes to prepare a stack. The prepared stack was vacuum-dried at a temperature 80 °C for 2 hours to prepare a solid electrolyte layer.

**Inactive member**

A slurry obtained by mixing a pulp fiber (cellulose fiber), a glass fiber, aluminum hydroxide ($Al(OH)_3$), an acrylic-based binder, and a solvent was molded into a gasket shape, and then the solvent was removed to prepare a flame-retardant inactive member.

A weight ratio of the pulp fiber (cellulose fiber), the glass fiber, the aluminum hydroxide ($Al(OH)_3$), and the acrylic-based binder was 20:8:70:2. A thickness of the inactive member was 120 μm.

Before the prepared flame-retardant inactive member was provided on the solid electrolyte layer, vacuum heat treatment was performed at a temperature of 80 °C for 5 hours to remove moisture and/or the like from the flame-retardant inactive member.

**Manufacturing of all solid secondary battery**

The interlayer was provided on the anode such that the first anode active material layer was in contact with the interlayer, the solid electrolyte layer was provided on the interlayer to be in contact with the solid electrolyte layer, and the cathode was provided on the solid electrolyte layer. A gasket was provided around the cathode to surround the cathode

and be in contact with the solid electrolyte layer, thereby preparing a stack. A thickness of the gasket was about 120 μm. The herein-described flame-retardant inactive member was utilized as the gasket. The gasket was provided in contact with a side surface of the cathode and the solid electrolyte layer. The cathode was provided at a central portion of the solid electrolyte layer, and the gasket was provided to be around or surround the cathode and extend to an end portion of the solid electrolyte layer. An area (e.g., surface area) of the cathode was about 90 % of an area (e.g., surface area) of the solid electrolyte layer, and the gasket was provided in the remaining 10 % of the entire area (e.g., surface area) of the solid electrolyte layer in which the cathode was not provided.

The prepared stack was plate-pressed at a temperature of 85 °C and a pressure of 500 MPa for 30 minutes. Through the plate pressing, the solid electrolyte layer was sintered to improve battery performance characteristics. A thickness of the sintered solid electrolyte layer was about 45 μm. A density of the $Li_6PS_5Cl$ solid electrolyte, which was an argyrodite-type or kind (e.g., argyrodite) crystal included in the sintered solid electrolyte layer, was 1.6 gram per cubic centimeter (g/cc). The area of the solid electrolyte layer was equal to an area of the anode.

The pressed stack was put into a pouch and vacuum-sealed to manufacture an all solid secondary battery. Portions of the cathode current collector and the anode current collector were extended to the outside of the sealed battery and utilized as a cathode terminal and an anode terminal.

**Example 2**

An interlayer and an all solid secondary battery were prepared in substantially the same manner as in Example 1, except that, during preparation of the interlayer, a content (e.g., amount) of a liquid electrolyte was about 30 parts by weight with respect to 100 parts by weight of a composition for forming an interlayer.

**Example 3**

An interlayer and an all solid secondary battery were prepared in substantially the same manner as in Example 1, except that the interlayer was formed to have a thickness of about 15 μm.

**Example 4**

An interlayer and an all solid secondary battery were manufactured in substantially the same manner as in Example 1, except that, during of the interlayer, a composition for forming an interlayer was applied onto a first anode active material layer instead of a substrate.

**Example 5: Lithium sulfide cathode/SE/interlayer (SLICP (polymer of Formula 8)) and liquid**

**Electrolyte/Ag-C anode layer/anode-containing all solid secondary battery**

An interlayer and an all solid secondary battery were manufactured in substantially the same manner as in Example 1, except that a polymer of Formula 8 was utilized during preparation of a composition for forming an interlayer.

Formula 8

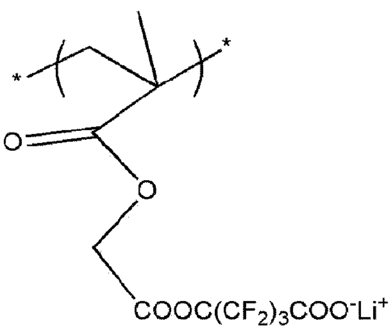

The polymer of Formula 8 was obtained according to a manufacturing method disclosed in cited literature 2 (Journal of Power Sources 189 (2009) 531-535), the entire content of which is herein incorporated by reference.

**Reference Example 1: $Li_2S$-LiI-CNF cathode/SE/Ag-C anode layer/anode current collector-containing all solid secondary battery**

An all solid secondary battery was manufactured in substantially the same manner as in Example 1, except that an interlayer was not positioned between a solid electrolyte layer and a first anode active material layer.

**Comparative Example 1: Lithium sulfide cathode/SE/GEL film/Ag-C anode layer-containing all solid secondary battery**

An all solid secondary battery was manufactured in substantially the same manner as in Example 1, except that a gel-type or kind polymer electrolyte obtained according to the following process was stacked to a thickness of 30 μm instead of an interlayer.

A composition for forming a gel-type or kind polymer electrolyte was prepared by mixing trimethylolpropane triacrylate (TMPTA), a mixed solution of EC, DMC, and EMC (weight ratio of 1:1:0.5), in which 1.3 M $LiPF_6$ was dissolved, as a liquid electrolyte, and 240.30 g/mol of benzoin ethyl ether (manufactured by Sigma-Aldrich Co. LLC) as an initiator.

A mixture, which was obtained by adding 0.6 M $LiBF_4$ and 0.6 M LiDFOB (lithium difluoro(oxalate)borate) to a mixed solvent of DEC and fluoroethylene carbonate (FEC) having a volume ratio of 2:1, was utilized as the liquid electrolyte.

The composition included 2.9 parts by weight of the TMPTA, 0.1 parts by weight of DMI-AC, and 97 parts by weight of the liquid electrolyte with respect to 100 parts by weight of the total weight of the composition, and the initiator was utilized at 3 parts by weight with respect to 100 parts by weight of the TMPTA.

The composition for forming the gel-type or kind polymer electrolyte was provided on a polyethylene (PE) separator to be uniformly impregnated, and the composition was thermally cross-linked in an oven at a temperature of 70 °C for 2 hours to prepare the gel-type or kind polymer electrolyte.

**Evaluation Example 1: XRD analysis and SEM analysis**

By utilizing Cu Kα radiation, an XRD spectrum was measured on bare $Li_2S$ utilized in Preparation Example 1, pulverized $Li_2S$, the $Li_2S$-LiI composite prepared in a first stage of Preparation Example 4, and the $Li_2S$-LiI-CNF composite prepared in Preparation

Measurement results are shown in Table 1 and FIG. 1. $Li_2S$ crystallite sizes and lattice constants were derived from a first peak for a (111) crystal plane appearing at a diffraction angle 2θ of 27°±2.0° in the XRD spectrum.

The pulverized $Li_2S$ was prepared through milling under the same conditions, except that a mixture including $Li_2S$ and LiI at a weight ratio of 30:20 in a first stage of Example 1 was changed to a mixture including $Li_2S$ at 50 parts by weight. A second stage was not performed.

A composite particle size (for example, a D50 particle diameter) of each of the bare $Li_2S$, the pulverized $Li_2S$, the $Li_2S$-LiI composite prepared in the first stage, and the $Li_2S$-LiI-CNF composite was measured by utilizing a particle size analyzer (PSA) utilizing a laser and a scanning electron microscope (SEM). Measurement results are shown in Table 1 and FIGS. 2A and 2B.

Table 1

| Classification | Second peak position [°] | $Li_2S$ crystallite size [nm] | Particle size [μm] |
|---|---|---|---|
| Bare $Li_2S$ | 27.0211 | 65 | 8 |
| | First peak position [°] | $Li_2S$ crystallite size [nm] | Particle size [μm] |
| Pulverized $Li_2S$ | 26.9270 | 15 | - |
| **$Li_2S$-LiI** composite (first stage) | 26.6074 | 8.8 | Less than 1 |
| Preparation Example 4 ($Li_2S$-LiI-CNF composite) | 26.7020 | 9.9 | Less than 1 |

As shown in Table 1, a position of a first peak for a (111) crystal plane appearing at a diffraction angle 2θ of 27°±2.0° of the $Li_2S$-LiI-CNF composite of Preparation Example 4 shifted to a lower angle than a position of a second peak for a (111) crystal plane appearing at a diffraction angle 2θ of 27°±2.0° of the bare $Li_2S$. A first diffraction angle of the first peak of the $Li_2S$-LiI-CNF composite of Example 1 was less than a second diffraction angle of the second peak of the bare $Li_2S$. In some embodiments, a crystallite size of the $Li_2S$-LiI-CNF composite of Example 1 was considerably reduced as compared with a crystallite size of the bare $Li_2S$.

As shown in Table 1, a position of a first peak of each of the $Li_2S$-LiI-CNF composite and the $Li_2S$-LiI composite shifted to a lower angle than a position of a first peak of the pulverized $Li_2S$. In some embodiments, the first peak of the $Li_2S$-LiI-CNF composite of Example 1 had a first full-width at half-maximum (FWHM) (FWHM1), the second peak of the bare $Li_2S$ had a second FWHM (FWHM2), and FWHM1 was greater than FWHM2. In some embodiments, FWHM1 was 1° or more.

As shown in Table 1, the particle size and crystallite size of $Li_2S$-LiI composite were significantly reduced as compared with $Li_2S$.

In some embodiments, the lattice constant of the $Li_2S$-LiI composite of Preparation Example 1 was larger than that of the bare $Li_2S$. An increase in lattice constant of the $Li_2S$-LiI composite as compared with the lattice constant of the bare $Li_2S$ was determined to be due to LiI being dissolved in a $Li_2S$ crystal. It was confirmed that the $Li_2S$-LiI composite formed a solid solution.

**Evaluation Example 2: Charge/discharge test**

The charge/discharge characteristics of the all solid secondary batteries manufactured in Example 1 to 5 and Comparative Example 1 were evaluated through the following charge/discharge test.

The charge/discharge test was performed by put the all solid secondary battery into a thermostatic bath at a temperature of 45 °C.

At a 1$^{st}$ cycle, the all solid secondary batteries were charged at a constant current of 0.1 C for 12.5 hours until a battery voltage reached 2.5 V to 2.8 V. Subsequently, the all solid secondary batteries were discharged at a constant current of 0.1 C for 12.5 hours until the battery voltage reached 0.3 V.

A discharge capacity of the 1$^{st}$ cycle was taken as a standard capacity. The standard capacity is shown as a specific capacity of $Li_2S$ in Table 2.

From a 2$^{nd}$ cycle, charging and discharging were performed up to a 150$^{th}$ cycle under the same conditions as the 1$^{st}$ cycle. Measurement results are shown in Table 2. Initial efficiency is represented by Equation 1.

Equation 1

$$\text{initial efficiency [\%]} = [1^{st}\text{ cycle discharge capacity}/1^{st}\text{ cycle charge capacity}]\times 100$$

The number of cycles refers to the number of cycles required for discharge capacity to decrease to 80 % of the standard capacity after the 2$^{nd}$ cycle. It was regarded that, as the number of cycles was increased, lifespan characteristics were improved.

Table 2

| Classification | Cathode | Specific capacity [mAh/g] | Electrode density (mg/cm$^2$) | Electrode capacity (mAh/g) | Initial efficiency [%] | Number of cycles (times) |
|---|---|---|---|---|---|---|
| Example 1 | $Li_2S$-LiI-CNF cathode/SE/interlayer (SLICP (LiPSFSI)+IL (15 parts by weight)) (d: 30μm)/Ag-C anode layer/anode current collector | 900 | 10 | 270 | 87 | 200 |
| Example 2 | $Li_2S$-LiI-CNF cathode/SE/interlayer (SLICP (LiPSFSI)+IL (30 parts by weight))/Ag-C anode layer/anode current collector | 830 | 9.8 | 249 | 81 | 150 |
| Example 3 | $Li_2S$-LiI-CNF cathode/SE/interlayer (SLICP (LiPSFSI)+IL (15 parts by weight)) (d: 15μm)/Ag-C anode layer/anode current collector | 960 | 10 | 258 | 83 | 160 |

(continued)

| Classification | Cathode | Specific capacity [mAh/g] | Electrode density (mg/cm²) | Electrode capacity (mAh/g) | Initial efficiency [%] | Numb er of cycles (times) |
|---|---|---|---|---|---|---|
| Example 4 | $Li_2S$-LiI-CNF cathode/SE/interlayer (SLICP (LiPSFSI)+IL (15 parts by weight)) (d: 30μm))/Ag-C anode layer/anode current collector | 880 | 10.1 | 264 | 86 | 180 |
| Example 5 | $Li_2S$-LiI-CNF cathode/SE/interlayer (SLICP (polymer of Formula 8)+IL)/Aq-C | 840 | 9.9 | 252 | 82 | 140 |
| Referenc e Example 1 | $Li_2S$-LiI-CNF cathode /SE/Ag-C anode layer | 1,000 | 10 | 300 | 78 | 50 |
| Compara tive Example 1 | $Li_2S$-LiI-CNF cathode/SE/GEL film/Ag-C anode layer | 800 | 9.9 | 240 | 74 | 40 |

As shown in Table 2, the all solid secondary batteries of Examples 1 to 5 showed improved discharge capacity, initial efficiency, and lifespan characteristics as compared with Reference Example 1 and Comparative Example 1.

The interlayer of each of the all solid secondary batteries of Examples 1 to 5 assisted in lithium ions mobility (e.g., movement) to have decreased interfacial resistance and suppressed or reduced lithium dendrites through substantially uniform deposition of lithium to improve lifespan characteristics as shown in Table 2 herein. There may be no need to utilize a pressure sheet that induces a substantially uniform deposition of lithium, so that energy density of the all solid secondary batteries may be improved.

In comparison, unlike the interlayer of each of the all solid secondary battery of Examples 1 to 5, the gel-type or kind polymer electrolyte of the all solid secondary battery of Comparative Example 1 had to be thickly formed, and thus resistance against lithium conduction was increased, resulting in a decrease in lifespan and initial efficiency characteristics.

**Evaluation Example 3: High-rate characteristics**

The high-rate characteristics of the all solid secondary batteries manufactured in Examples 1 to 5, Reference Example 1, and Comparative Example 1 were evaluated through the following charge/discharge test. The charge/-discharge test was performed by put the all solid secondary batteries into a thermostatic bath at a temperature of 45 °C.

Each all solid secondary battery was charged at a constant current rate of 0.1 C at a temperature of 45 °C until a voltage reached 2.5 V (vs. Li), and then, in a constant voltage mode, while 2.5 V was maintained, the charging was cut-off at a current rate of 0.05 C. Subsequently, each all solid secondary battery was discharged at a constant current rate of 0.5 C until the voltage reached 0.3 V (vs. Li) during discharging (formation cycle).

Each all solid secondary battery was charged at a constant current rate of 0.1 C at a temperature of 45 °C until a voltage reached 2.5 V (vs. Li), and then, in a constant voltage mode, while 25. V was maintained, the charging was cut-off at a current rate of 0.05 C. Subsequently, each all solid secondary battery was discharged at a constant current rate of 0.1 C until the voltage reached 0.3 V (vs. Li) during discharging ($1^{st}$ cycle).

The all solid secondary battery subjected to the formation cycle was charged at a constant current rate of 0.2 C rate at a temperature of 45 °C until the voltage reached 2.5 V (vs. Li). Subsequently, each all solid secondary battery was discharged at a constant current rate of 0.2 C until the voltage reached 0.3 V (vs. Li) during discharging ($2^{nd}$ cycle).

The all solid secondary battery subjected to the $1^{st}$ cycle was charged at a constant current rate of 0.2 C rate at a temperature of 45 °C until the voltage reached 2.5 V (vs. Li). Subsequently, each all solid secondary battery was discharged at a constant current rate of 0.33 C until the voltage reached 0.3 V (vs. Li) during discharging ($2^{nd}$ cycle).

The all solid secondary batter subjected to the $2^{nd}$ cycle was charged at a constant current rate of 0.2 C rate at a temperature of 45 °C until the voltage reached 2.5 V (vs. Li). Subsequently, each all solid secondary battery was discharged at a constant current rate of 0.5 C until the voltage reached 0.3 V (vs. Li) during discharging ($3^{rd}$ cycle).

The all solid secondary battery subjected to the $3^{rd}$ cycle was charged at a constant current rate of 0.2 C rate at a temperature of 45 °C until the voltage reached 2.5 V (vs. Li). Subsequently, each all solid secondary battery was discharged at a constant current rate of 1.0 C until the voltage reached 0.3 V (vs. Li) during discharging ($4^{th}$ cycle).

The all solid secondary battery was rested for 10 minutes after every charging/discharging cycle. Some of charge/discharge test results at room temperature are shown in Table 3. High-rate characteristics are defined by Equation 2:

$$\text{high-rate characteristics (\%)} = [\text{discharge capacity at } 4^{th} \text{ cycle / discharge capacity at } 1^{st} \text{ cycle}] \times 100 \qquad \text{equation 2}$$

[Table 3]

| Classification | Cathode | High-rate characteristics (1C/0.1C) [%] |
|---|---|---|
| Example 1 | $Li_2S$-LiI-CNF cathode/SE/interlayer (SLICP (LiPSFSI)+IL (15 parts by weight)) (d: 30 μm)/Ag-C anode layer/anode current collector | 86 |
| Example 2 | $Li_2S$-LiI-CNF cathode/SE/interlayer (SLICP (LiPSFSI)+IL (30 parts by weight))/Ag-C anode layer/anode current collector | 80 |
| Example 3 | $Li_2S$-LiI-CNF cathode/SE/interlayer (SLICP (LiPSFSI)+IL (15 parts by weight)) (d: 15 μm))/Ag-C anode layer/anode current collector | 81 |
| Example 4 | $Li_2S$-LiI-CNF cathode/SE/interlayer (SLICP (LiPSFSI)+IL (15 parts by weight)) (d: 30 μm))/Ag-C anode layer/anode current collector | 84 |
| Example 5 | $Li_2S$-LiI-CNF cathode/SE/interlayer (SLICP (polymer of Formula 8) +IL)/Aq-C | 78 |
| Reference Example 1 | $Li_2S$-LiI-CNF cathode /SE/Ag-C anode layer | 72 |
| Comparative Example 1 | $Li_2S$-LiI-CNF cathode/SE/GEL film/Ag-C anode layer | 65 |

As shown in Table 3, the all solid secondary batteries of Examples 1 to 5 had improved high-rate characteristics as compared with the all solid secondary batteries of Comparative Example 1 and Reference Example 1.

**Evaluation example 4: Flexibility evaluation**

The flexibility of each of the all solid secondary batteries of Examples 1 to 5, Reference Example 1, and Comparative Example 1 was evaluated through a 3-point bending test. Results thereof are shown in Table 4 .

The 3-point bending test was performed by measuring a time at which fracture occurred.

Table 4

| Classification | Cathode | Time (sec) |
|---|---|---|
| Example 1 | $Li_2S$-LiI-CNF cathode/SE/interlayer (SLICP (LiPSFSI)+IL (15 parts by weight)) (d: 30 μm)/Ag-C anode layer/anode current collector | 84 |
| Example 2 | $Li_2S$-LiI-CNF cathode/SE/interlayer (SLICP (LiPSFSI)+IL (30 parts by weight))/Ag-C anode layer/anode current collector | 75 |
| Example 3 | $Li_2S$-LiI-CNF cathode/SE/interlayer (SLICP (LiPSFSI)+IL (15 parts by weight)) (d: 15 μm))/Ag-C anode layer/anode current collector | 76 |
| Example 4 | $Li_2S$-LiI-CNF cathode/SE/interlayer (SLICP (LiPSFSI)+IL (15 parts by weight)) (d: 30 μm))/Ag-C anode layer/anode current collector | 85 |
| Example 5 | $Li_2S$-LiI-CNF cathode/SE/interlayer (SLICP (polymer of Formula 8) +IL)/Aq-C | 74 |
| Reference Example 1 | $Li_2S$-LiI-CNF anode /SE/Ag-C cathode layer | 35 |
| Comparative Example 1 | $Li_2S$-LiI-CNF cathode/SE/GEL film/Ag-C anode layer | 55 |

As shown in Table 4, it may be seen that, due to a delay in the time at which fracture occurred, the flexibility of each of the all solid secondary batteries of Examples 1 to 5 was considerably improved as compared with the all solid secondary batteries of Comparative Example 1 and Reference Example 1.

According to an aspect, there may be provided an all solid secondary battery in which lithium is induced to be uniformly deposited in an anode to increase pressing process efficiency and improve lifespan and high-rate characteristics.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

## Claims

**1.** An all solid secondary battery (1), the all solid secondary battery (1) comprising:

a cathode (10);
an anode (20); and
a solid electrolyte layer (30) between the cathode (10) and the anode (20),
wherein the anode (20) comprises an anode current collector (21) and a first anode active material layer (22) on a surface of the anode current collector (21), and
the cathode (10) comprises a cathode current collector (11) and a cathode active material layer (12) on a surface of the cathode current collector (11) and comprising a cathode active material, and
wherein the cathode active material comprises $Li_2S$, an $Li_2S$ composite, or a combination thereof, and
the all solid secondary battery (1) comprises an interlayer (31) between the anode (20) and the solid electrolyte layer (30) and interlayer (31) comprises a single lithium ion conducting polymer (SLICP) and a liquid electrolyte.

**2.** The all solid secondary battery (1) as claimed in claim 1, wherein the SLICP is a polymer comprising a repeating unit selected from among

a repeating unit represented by Formula 1,
a repeating unit represented by Formula 2 or Formula 3,
the repeating unit represented by Formula 2 or Formula 3 and a repeating unit represented by Formula 4,
a repeating unit represented by Formula 5, and
combinations thereof:

Formula 1

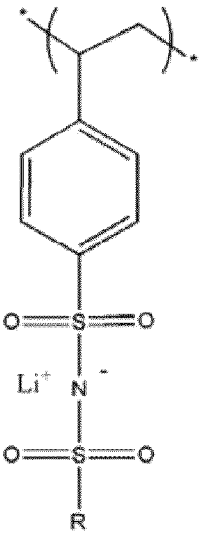

wherein, in Formula 1, R is a $C_1$-$C_6$ alkyl group partially substituted with fluorine or perfluorinated, a $C_2$-$C_6$ alkenyl group partially substituted with fluorine or perfluorinated, or a $C_2$-$C_6$ alkynyl group partially substituted with fluorine or perfluorinated,

Formula 2

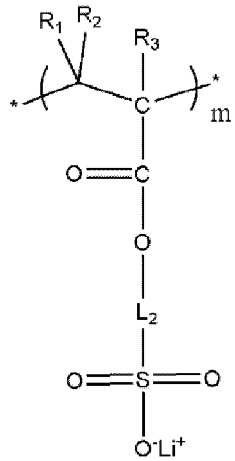

wherein, in Formula 2, $L_2$ is a linker and is a $C_1$-$C_{10}$ alkylene group, a $C_2$-$C_{10}$ alkenylene group, or a $C_2$-$C_{10}$ alkynylene group, $R_1$ to $R_3$ are each independently hydrogen or a $C_1$-$C_{30}$ alkyl group, and m is a mole fraction of the repeating unit and is a number from 0 to 1,

Formula 3

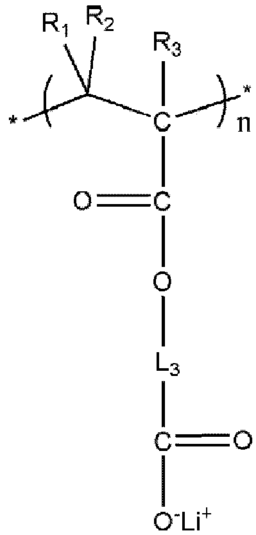

wherein, in Formula 3, $L_3$ is a linker and is a $C_1$-$C_{10}$ alkylene group or - $(CH_2CH_2O)a$-, a is an integer from 1 to 5, $R_1$ to $R_3$ are each independently hydrogen or a $C_1$-$C_{30}$ alkyl group, and n is a mole fraction of the repeating unit and is a number from 0 to 1,

Formula 4

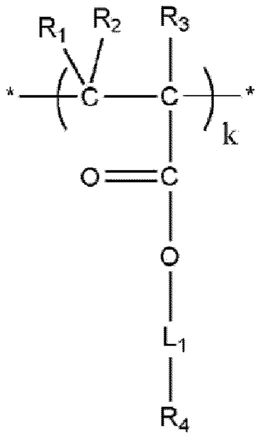

wherein, in Formula 4, $L_1$ is a $C_1$-$C_{10}$ alkylene group or -(CH2CH2O)a-, a is an integer from 1 to 5, $R_4$ is hydrogen or a $C_1$-$C_{10}$ alkyl group, and k is a mole fraction of the repeating unit and is a number from 0 to 1, and

Formula 5

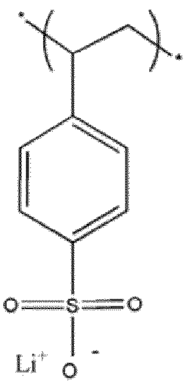

,

and

wherein,

in Formula 2 or Formula 3, m and n are each 1,

in Formula 2 and Formula 4, a sum of m and k is 1, and

in Formula 3 and Formula 4, a sum of n and k is 1.

**3.** The all solid secondary battery (1) as claimed in claim 1 or 2, wherein the interlayer (31) comprises a polymer comprising a repeating unit selected from among

a repeating unit represented by Formula 5,

a repeating unit represented by Formula 6,

a repeating unit represented by Formula 7,

a repeating unit represented by Formula 8,

a repeating unit represented by Formula 9,

a repeating unit represented by Formula 10,

a repeating unit represented by Formula 11, and

combinations thereof:

Formula 5

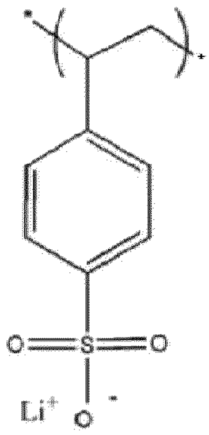

Formula 6

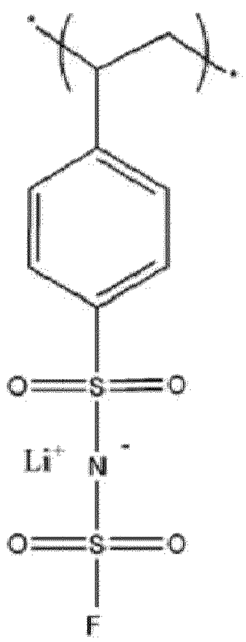

Formula 7

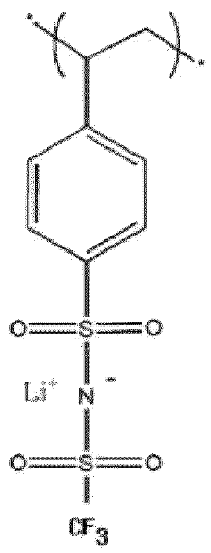

Formula 8

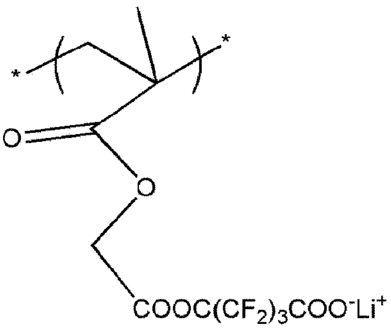

Formula 9

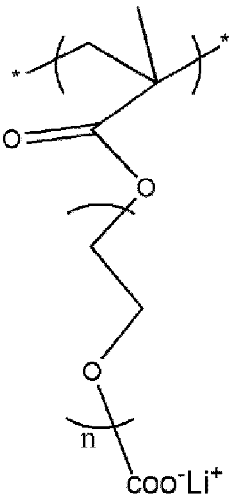

Formula 10

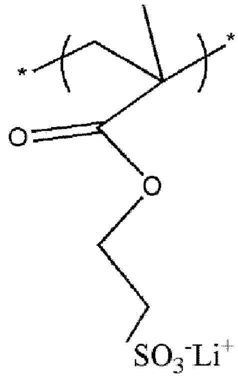

Formula 11

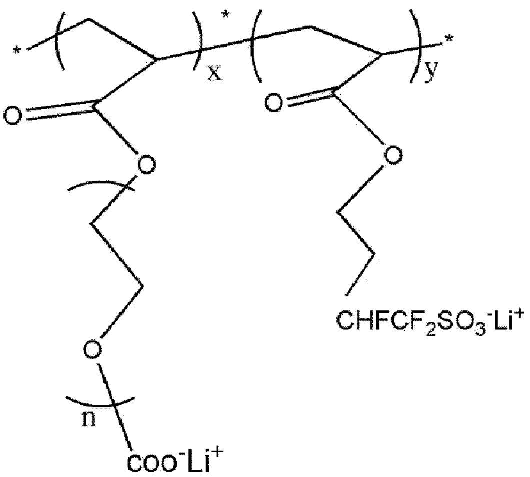

,

and

wherein, in Formula 11, x and y are each a mole fraction of the repeating unit and are each a number from 0 to 1, and a sum of x and y is 1.

**4.** The all solid secondary battery (1) as claimed in any of the claims 1 to 3, wherein an amount of the liquid electrolyte in the interlayer (31) is about 1 to about 30 parts by weight with respect to 100 parts by weight of a total weight of the interlayer (31).

**5.** The all solid secondary battery (1) as claimed in any of the claims 1 to 4, wherein a thickness of the interlayer (31) is about 1 micrometer (μm) to about 50 μm.

**6.** The all solid secondary battery (1) as claimed in in any of the claims 1 to 5, wherein the liquid electrolyte in the interlayer (31) comprises a lithium salt and an organic solvent, preferably wherein a concentration of the lithium salt is about 1 M to about 5 M, and the lithium salt comprises at least one selected from among $LiN(CN)_2$, $LiClO_4$, $LiBF_4$, $LiAsF_6$, $LiPF_6$, $LiCF_3SO_3$, $LiC(CF_3SO_2)_3$, $LiC(FSO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, and $LiB(C_2O_4)_2$.

**7.** The all solid secondary battery (1) as claimed in any of the claims 1 to 6, wherein the liquid electrolyte further comprises at least one selected from among an ionic liquid and a polymer ionic liquid.

**8.** The all solid secondary battery (1) as claimed in in any of the claims 1 to 7, wherein the $Li_2S$ composite comprises a composite of $Li_2S$ and a lithium salt, wherein preferably the lithium salt is a binary compound or a ternary compound,

the binary compound comprising LiI, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_3$, or a combination thereof,
the ternary compound comprising $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, LisNCl2, $Li_3BN_2$, or a combination thereof.
wherein the composite of $Li_2S$ and the lithium salt is represented by $Li_2S$-$Li_aX_b$, wherein $1 \leq a \leq 5$, $1 \leq b \leq 5$, and X is I, Br, Cl, F, H, O, Se, Te, N, P, As, Sb, Al, B, OCl, $PF_6$, $BF_4$, $SbF_6$, $AsF_6$, $ClO_4$, $AlO_2$, $AlCl_4$, NOs, COs, $BH_4$, $SO_4$, BOs, $PO_4$, NCl, $NCl_2$, $BN_2$, or a combination thereof

**9.** The all solid secondary battery (1) as claimed in in any of the claims 1 to 8, wherein

the $Li_2S$ composite further comprises a carbon-based material,
wherein the carbon-based material comprises a fibrous carbon-based material,
the fibrous carbon-based material comprises carbon nanostructures, the carbon nanostructures comprise carbon nanofibers, carbon nanotubes, carbon nanobelts, carbon nanorods, or a combination thereof, and
an amount of the carbon-based material is about 1 wt% to about 20 wt% of a total weight of the $Li_2S$ composite.

**10.** The all solid secondary battery (1) as claimed in any of the claims 1 to 9, wherein the $Li_2S$ composite comprises a solid solution of $Li_2S$ and a lithium salt, and
wherein a size of a $Li_2S$ crystallite obtained from an X-ray diffraction (XRD) spectrum of the composite is about 20 nanometer (nm) or less.

**11.** The all solid secondary battery (1) as claimed in any of the claims 1 to 10, wherein an amount of the cathode active material is about 60 wt% to about 80 wt% of a total weight of the cathode active material layer (12), and
the cathode active material layer (12) further comprises at least one selected from among a solid electrolyte and a binder.

**12.** The all solid secondary battery (1) as claimed in any of the claims 1 to 11, wherein the solid electrolyte layer (30) further comprises a solid electrolyte, a gel electrolyte, or a combination thereof,

the solid electrolyte comprising a sulfide-based solid electrolyte, an oxide-based solid electrolyte, a polymer solid electrolyte, or a combination thereof,
the gel electrolyte comprising a polymer gel electrolyte, wherein preferably the solid electrolyte comprises the sulfide-based solid electrolyte comprising at least one selected from among
$Li_2S$-$P_2S_5$,
$Li_2S$-$P_2S_5$-LiX, wherein X is a halogen element,
$Li_2S$-$P_2S_5$-$Li_2O$,
$Li_2S$-$P_2S_5$-$Li_2O$-LiI,
$Li_2S$-$SiS_2$,
$Li_2S$-$SiS_2$-LiI,
$Li_2S$-$SiS_2$-LiBr,
$Li_2S$-$SiS_2$-LiCl,
$Li_2S$-$SiS_2$-$B_2S_3$-LiI,
$Li_2S$-$SiS_2$-$P_2S_5$-LiI,
$Li_2S$-$B_2S_3$,
$Li_2S$-$P_2S_5$-$Z_mS_n$, wherein m and n are each a positive number and Z is one of Ge, Zn, and Ga,
$Li_2S$-$GeS_2$,
$Li_2S$-$SiS_2$-$Li_3PO_4$,
$Li_2S$-$SiS_2$-$Li_pMO_q$, wherein p and q are each a positive number and M is one of P, Si, Ge, B, Al, Ga, and In,
$Li_{7-x}PS_{6-x}Cl_x$, wherein $0 \leq x \leq 2$,
$Li_{7-x}PS_{6-x}Br_x$, wherein $0 \leq x \leq 2$, and
$Li_{7-x}PS_{6-x}I_x$, wherein $0 \leq x \leq 2$,
wherein the sulfide-based solid electrolyte is an argyrodite-type solid electrolyte, the argyrodite-type solid electrolyte comprising at least one selected from among $Li_6PS_5Cl$, $Li_6PS_5Br$, and LisPSsl, and
wherein the sulfide-based solid electrolyte has a density of about 1.5 gram per cubic centimeter (g/cc) to about 2.0 g/cc, and comprises particles having an average particle diameter (D50) of about 0.1 μm to about 1.9 μm.

**13.** The all solid secondary battery (1) as claimed in any of the claims 1 to 12, wherein:

the first anode active material layer (22) is a metal layer, the metal layer comprising lithium or a lithium alloy; or the first anode active material layer (22) comprises an anode active material and a binder, the anode active material comprising particles having an average particle diameter of 4 μm or less,
whereby preferably the anode active material comprises at least one selected from among a carbon-based anode active material and a metal or metalloid anode active material,
the carbon-based anode active material comprising amorphous carbon, crystalline carbon, porous carbon, or a combination thereof,
the metal or metalloid anode active material comprising gold (Au), platinum (Pt), palladium (Pd), silicon (Si), silver (Ag), aluminum (Al), bismuth (Bi), tin (Sn), zinc (Zn), or a combination thereof and/or wherein preferably the anode active material comprises a mixture of first particles comprising amorphous carbon and second particles comprising metal or metalloid,
wherein an amount of second particles is about 1 wt% to about 60 wt% with respect to a total weight of the mixture.

**14.** The all solid secondary battery (1) as claimed in any of the claims 1 to 13, further comprising a second anode active material layer (24) between the anode current collector (21) and the first anode active material layer (22) and/or between the anode current collector (21) and the solid electrolyte layer (30),
wherein the second anode active material layer (24) is a metal layer, and the metal layer comprises lithium or a lithium alloy.

**15.** The all solid secondary battery (1) as claimed in in any of the claims 1 to 14, wherein the cathode (10) comprises a cathode current collector (11), and the anode (20) comprises an anode current collector (21), and

at least one of the cathode current collector (11) or the anode current collector (21) comprises a base film and a metal layer on a surface of the base film, and
wherein the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

FIG. 1

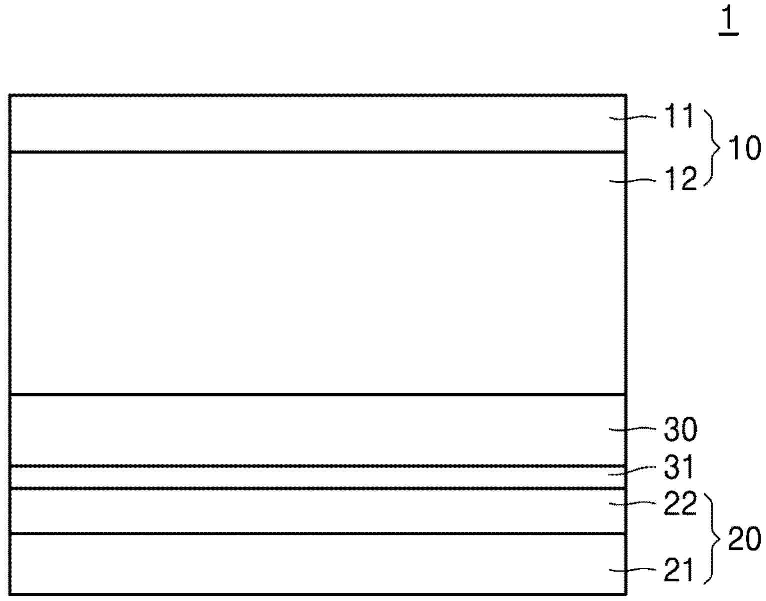


FIG. 2

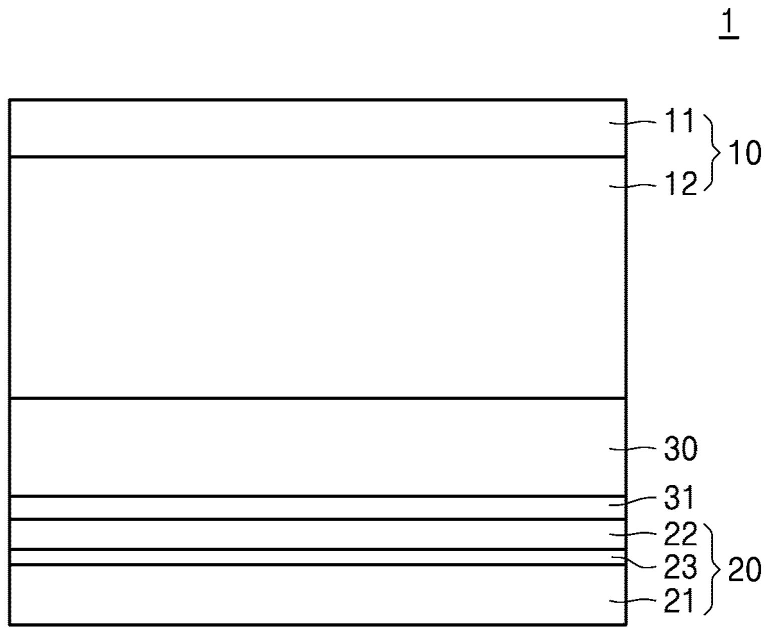

FIG. 3

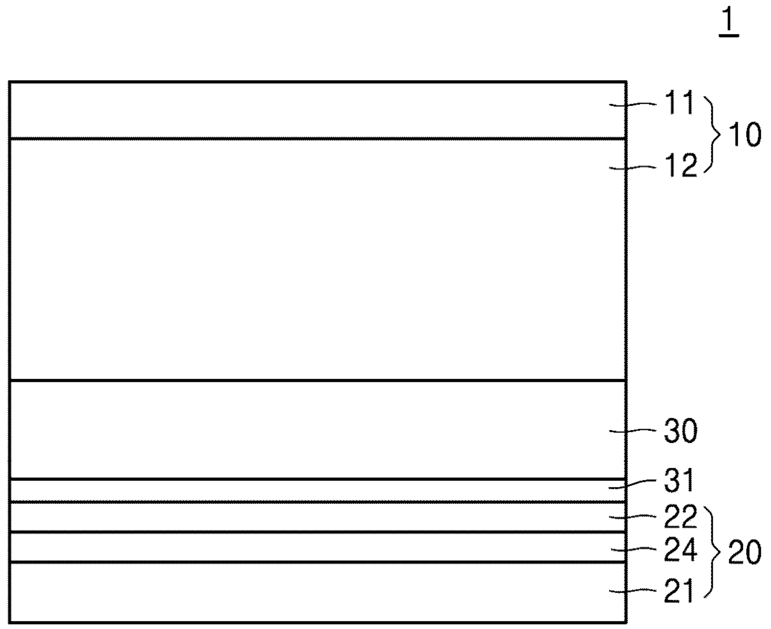


FIG. 4

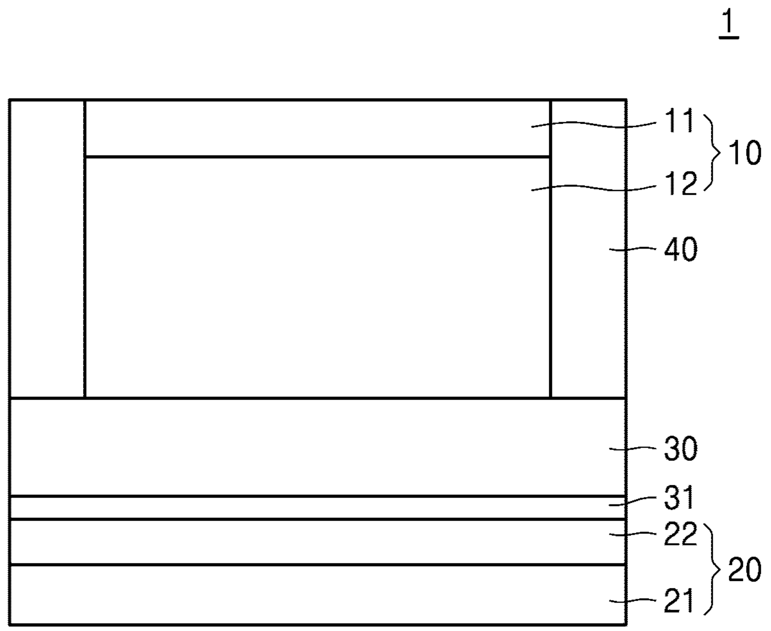

FIG. 5

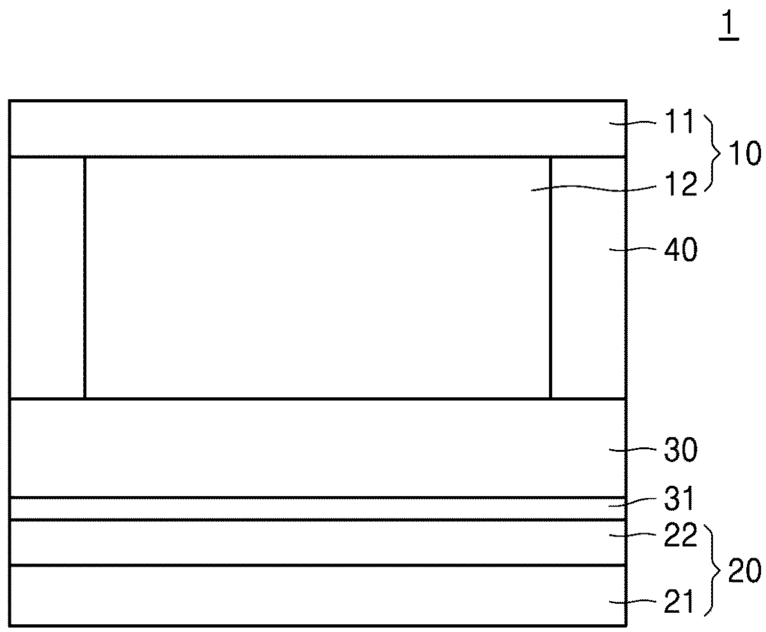

Europäisches Patentamt
European Patent Office
Office européen des brevets

# EUROPEAN SEARCH REPORT

Application Number
EP 24 17 9989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/050596 A1 (LI ZHE [CN] ET AL) 18 February 2021 (2021-02-18) * paragraph [0046]; claim 16; figure 1 * ----- | 1-15 | INV. H01M4/133 H01M4/134 H01M4/136 H01M4/36 H01M4/38 H01M4/40 H01M4/62 H01M4/66 H01M10/052 H01M10/0525 H01M10/056 H01M4/58 H01M10/0562 |
| A | US 11 431 027 B1 (JI LIWEN [US] ET AL) 30 August 2022 (2022-08-30) * claims 1,15,16; example * ----- | 1-15 | |
| A | US 2020/365897 A1 (BADDING MICHAEL EDWARD [US] ET AL) 19 November 2020 (2020-11-19) * claims 1,3 * ----- | 1-15 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 14 November 2024 | Steinreiber, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 17 9989

This annex lists the patent family members relating to the patent documents cited in the above-mentioned European search report. The members are as contained in the European Patent Office EDP file on
The European Patent Office is in no way liable for these particulars which are merely given for the purpose of information.

14-11-2024

| Patent document cited in search report | Publication date | Patent family member(s) | Publication date |
|---|---|---|---|
| US 2021050596 A1 | 18-02-2021 | CN 112397765 A | 23-02-2021 |
| | | US 2021050596 A1 | 18-02-2021 |
| US 11431027 B1 | 30-08-2022 | US 11431027 B1 | 30-08-2022 |
| | | US 2023127931 A1 | 27-04-2023 |
| US 2020365897 A1 | 19-11-2020 | CN 111952551 A | 17-11-2020 |
| | | TW 202105817 A | 01-02-2021 |
| | | US 2020365897 A1 | 19-11-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230117224


### Non-patent literature cited in the description


- *RSC Advances*, vol. 6 (39), 32454-32461
- *Journal of Power Sources*, 2009, vol. 189, 531-535